(19) Europäisches Patentamt / European Patent Office / Office européen des brevets

(11) **EP 3 338 131 B1**

(12) **EUROPÄISCHE PATENTSCHRIFT**

(45) Veröffentlichungstag und Bekanntmachung des Hinweises auf die Patenterteilung:
**28.07.2021  Patentblatt 2021/30**

(21) Anmeldenummer: **16757207.2**

(22) Anmeldetag: **18.08.2016**

(51) Int Cl.:
*G02B 13/00* (2006.01)   *G02B 27/10* (2006.01)
*H04N 5/225* (2006.01)   *H04N 5/232* (2006.01)
*G02B 26/08* (2006.01)   *G02B 7/08* (2021.01)
*G02B 27/64* (2006.01)

(86) Internationale Anmeldenummer:
**PCT/EP2016/069653**

(87) Internationale Veröffentlichungsnummer:
**WO 2017/029380 (23.02.2017 Gazette 2017/08)**

(54) **MULTIAPERTURABBILDUNGSVORRICHTUNG MIT KANALINDIVIDUELLER EINSTELLBARKEIT**

MULTI-APERTURE IMAGING DEVICE HAVING CHANNEL-SPECIFIC ADJUSTABILITY

DISPOSITIF DE REPRODUCTION À MULTIPLES OUVERTURES AVEC POSSIBILITÉ DE RÉGLAGE INDIVIDUEL DES CANAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.08.2015  DE 102015215845**

(43) Veröffentlichungstag der Anmeldung:
**27.06.2018  Patentblatt 2018/26**

(73) Patentinhaber: **Fraunhofer-Gesellschaft zur Förderung der angewandten Forschung e.V. 80686 München (DE)**

(72) Erfinder:
• **WIPPERMANN, Frank 07745 Jena (DE)**
• **BRÜCKNER, Andreas 07745 Jena (DE)**
• **BRÄUER, Andreas 07745 Jena (DE)**

• **OBERDÖRSTER, Alexander 07745 Jena (DE)**

(74) Vertreter: **König, Andreas Rudolf Schoppe, Zimmermann, Stöckeler Zinkler, Schenk & Partner mbB Patentanwälte Radlkoferstraße 2 81373 München (DE)**

(56) Entgegenhaltungen:
WO-A2-2015/015383   DE-A1-102013 209 819
DE-B3-102014 213 371   US-A1- 2009 122 406
US-A1- 2014 111 650   US-A1- 2015 109 468
US-A1- 2015 201 128   US-A1- 2015 215 607
US-B1- 6 992 699

• **Anonymous: "Autofokus - Wikipedia", , 8. Juli 2015 (2015-07-08), XP055307520, Gefunden im Internet: URL:https://de.wikipedia.org/w/index.php?title=Autofokus&oldid=143858343 [gefunden am 2016-10-04]**

**Beschreibung**

Die vorliegende Erfindung bezieht sich auf eine Multiaperturabbildungsvorrichtung mit einem einzeiligen Array von nebeneinander angeordneten optischen Kanälen.

Konventionelle Kameras besitzen einen Abbildungskanal, der das gesamte Objektfeld bzw. das Gesamtgesichtsfeld abbildet. Solche Kameras besitzen adaptive Komponenten, die eine Anpassung des Abbildungssystems ermöglichen und dabei Herstellungstoleranzen und den Einsatztemperaturbereich erweitern bzw. Autofokus sowie optische Bildstabilisierungsfunktionen ermöglichen. Multiaperturabbildungssysteme bestehen aus mehreren Abbildungskanälen, die jeweils nur einen Teil des Gesamtgesichtsfelds aufnehmen.

In US 2014/111650 A1 ist eine Vorrichtung zum Erfassen eines Bildes mittels gefalteter Optiken beschrieben, die zumindest eine reflektive oder refraktive Oberfläche aufweisen.

In US 2015/109468 A1 ist ein Verfahren und eine Vorrichtung zum Steuern des Auslesens von Reihen von Pixelwerten von Sensoren, die verschiedenen optischen Ketten entsprechen, die zum Erfassen von Teilen desselben Bildbereichs verwendet werden, beschrieben.

In DE 2014 213 371 B3 ist eine Vorrichtung zur Erfassung eines Objektbereichs mit einem flachen Gehäuse beschrieben. Die Vorrichtung umfasst eine Multiaperturvorrichtung mittels derer unterschiedliche Objektbereiche erfassbar sind.

In DE 10 2013 209 819 A1 ist eine Vorrichtung mit einer optischen Struktur und Stegen beschrieben, bei der zwischen den Stegen und der tragenden Struktur Kleber angeordnet ist, wobei der Kleber wirksam ist, um nach dessen Ausheilung eine vorbestimmte Ausrichtung der optischen Struktur bezüglich einer Bezugsebene zu bewirken.

In US 2015/215607 A1 ist ein Verfahren zum Kalibrieren der Bildverformung einer Bilderfassungsvorrichtung mit einer ersten und einer zweiten Linse, einem Fokussierungsaktuator und einer vorgespeicherten Beziehung zwischen Schritt und Fokussierungsabstand der ersten Fokussierung beschrieben.

In US 2009/122406 A1 ist beschrieben, einen optischen Bildstabilisator zu verwenden, um eine unerwünschte Bewegung eines Bildgebungssystems wie einer Kamera zu kompensieren. Eine Kamera verfügt über ein gefaltetes Optiksystem, das ein dreieckiges Prisma zum Falten der optischen Achse verwendet. Zwei Aktuatoren werden verwendet, um das Prisma um zwei Achsen zu drehen, um die Gierbewegung und die Nickbewegung der Kamera zu kompensieren.

In US 2015/201128 A1 ist ein Linsenarray-Gerät beschrieben. Die Vorrichtung umfasst eine Basis, einen Halter zum Halten der über der Basis angeordneten Linsen, eine erste OIS-Einheit zum Ansteuern des Halters in einer ersten Richtung senkrecht zur Richtung der optischen Achse und eine zweite OIS-Einheit zum Ansteuern des Halters zum Bewegen in a zweite Richtung orthogonal zur Richtung der optischen Achse.

In WO 2015/015383 A2 ist eine Digitalkamera mit zwei Blendenöffnungen mit Autofokus (AF) und verwandten Methoden zum Erhalten eines fokussierten und optional optisch stabilisierten Farbbilds eines Objekts oder einer Szene beschrieben. Eine Dual-Apertur-Kamera umfasst eine erste Subkamera mit einem ersten Optikblock und einen Farbbildsensor zum Bereitstellen eines Farbbildes, eine zweite Subkamera mit einem zweiten Optikblock und einen Klarbildsensor zum Bereitstellen eines Luminanzbildes.

In US 6,992,699 B1 ist eine Kombination aus mobilem Terminal und Kamera mit mehreren Lichtöffnungen im Gehäuse beschrieben. Eine Öffnung ist auf einer Vorderseite des Gehäuses angeordnet, während eine andere Öffnung auf einer Rückseite des Gehäuses angeordnet ist.

Die Aufgabe der vorliegenden Erfindung besteht darin, eine Multiaperturabbildungsvorrichtung zu schaffen, die mit einem verbesserten Verhältnis zwischen Aufwand und Abbildungsqualität herstellbar ist.

Diese Aufgabe wird durch den Gegenstand der unabhängigen Patentansprüche gelöst.

Eine Idee, auf der die vorliegende Anmeldung basiert, besteht darin, dass das Versehen einer Multiaperturabbildungsvorrichtung mit einem einzeiligen Array von nebeneinanderangeordneten optischen Kanälen mit einer Einstelleinrichtung zum kanalindividuellen Ändern einer relativen Lage zwischen einem Bildsensorbereich eines jeweiligen optischen Kanals, der Optik des jeweiligen optischen Kanals und einer Strahlumlenkvorrichtung des jeweiligen Kanals oder zum kanalindividuellen Ändern einer optischen Eigenschaft der Optik des jeweiligen optischen Kanals oder einer die Umlenkung des Strahlengangs des jeweiligen optischen Kanals betreffenden optischen Eigenschaft der Strahlumlenkvorrichtung sowie mit einem Speicher mit eingespeicherten Vorgabewerten und/oder einer Steuerung zur Umsetzung von Sensordaten in Vorgabewerte zur kanalindividuellen Ansteuerung der Einstellvorrichtung ermöglicht, Anforderungen an beispielsweise Herstellungstoleranzen der Multiaperturabbildungsvorrichtung zu verringern und/oder Anforderungen an die Multiaperturabbildungsvorrichtung bezüglich Lage- und Forminvarianz gegenüber Temperaturschwankungen zu reduzieren, so dass der mit dem Versehen einhergehende Zusatzaufwand wieder kompensiert wird. Die Einstelleinrichtung kann zusätzlich zu Aktoren vorgesehen sein, die von einer optischen Bildstabilisierungssteuerung der Multiaperturabbildungsvorrichtung und/oder von einer manuellen oder automatischen Fokuseinstellfunktion der Multiaperturabbildungsvorrichtung angesteuert werden. Eine derartige Vorrichtung ist eingerichtet dass die Strahlumlenkvorrichtung kanalglobal drehbar um eine Drehachse gelagert ist, die parallel zu einer Zeilenerstreckungsrichtung des einzeiligen Arrays liegt und weist ferner einen ersten Aktor zur Erzeugung einer Rotationsbewegung der Strahlumlenkvorrichtung um die Drehachse auf, der von einer optischen Bildstabilisierungssteuerung der Multiaperturabbildungsvorrichtung gesteuert ist; und weist ferner einen zweiten Aktor zum translatorischen Bewegen von Optiken der des einzeiligen Arrays von optischen Kanälen entlang der Zeilenerstreckungsrichtung des einzeiligen Arrays auf, der ferner von der optischen Bildstabilisierungssteuerung der Multiaperturabbildungsvorrichtung gesteuert ist, so dass durch die translatorische Bewegung der Optiken der des einzeiligen Arrays von optischen Kanälen eine Bildstabilisierung entlang einer ersten Bildachse und durch die Erzeugung der Rotationsbewegung der Strahlumlenkvorrichtung eine Bildstabilisierung entlang einer zweiten Bildachse bewirkt wird.

Vorteilhafte Ausgestaltungen sind Gegenstand der abhängigen Patentansprüche. Bevorzugte Ausführungsbeispiele der vorliegenden Anmeldung werden nachfolgend Bezug nehmend auf die Figuren näher erläutert. Es zeigen:

Fig. 1      ein schematisches Raumbild einer Multiaperturabbildungsvorrichtung gemäß einem Ausführungsbeispiel;

Fig. 2      eine schematische Seitenschnittansicht eines der Kanäle zur Veranschaulichung eines Aktors, den die Einstellungseinrichtung von Fig. 1 aufweisen kann, und der eine kanalindividuelle Relativbewegung zwischen Bildsensorbereich, Optik und/oder Strahlumlenkvorrichtungssegment des jeweiligen Kanals durchführt;

Fig. 3      eine schematische Seitenschnittansicht eines der Kanäle zur Veranschaulichung eines Aktors, den die Einstellungseinrichtung von Fig. 1 aufweisen kann, und der eine Drehung der Strahlumlenkvorrichtung um eine zu der Zeilenerstreckungsrichtung parallele Achse ausführt;

Fig. 4      eine schematische Seitenschnittansicht eines der optischen Kanäle, um ein Phasenänderungselement zu veranschaulichen, dass die Einstellungseinrichtung von Fig. 1 aufweisen kann;

Fig. 5      ein schematisches Raumbild einer Multiaperturabbildungsvorrichtung, wobei unter Weglassung der Einstelleinrichtung und des Speichers und/oder der Steuerung sowie der Bildstabilisierungssteuerung und Autofokussteuerung aus Fig. 1 zu Veranschaulichungszwecken konkrete Beispiele für mögliche zusätzliche Aktoren dargestellt sind, die zusätzlich zur Einrichtung aus Fig. 1 vorhanden sein können und beispielsweise Teil einer Bildstabilisierungssteuerung oder Autofokussteuerung der Multiaperturabbildungsvorrichtung sind;

Fig. 6      ein Raumbild eines mobilen Geräts, um einen Verbau der Multiaperturabbildungsvorrichtung zu illustrieren;

Fig. 7      ein Raumbild eines mobilen Geräts, um einen Verbau zweier Multiaperturabbildungsvorrichtungen zu Stereoskopiezwecken zu illustrieren; und

Fig. 8a und 8b      eine Seitenschnittansicht und eine Draufsicht einer Multiaperturabbildungsvorrichtung gemäß einer Variante zu Fig. 1, bei der die optischen Achsen der Kanäle eine Vorab-Divergenz aufweisen, um divergent in einer gemeinsamen Ebene parallel zur Zeilenerstreckungsrichtung zu verlaufen, so dass die Anzahl der Facetten mit paarweise unterschiedlicher Neigung verringert werden kann.

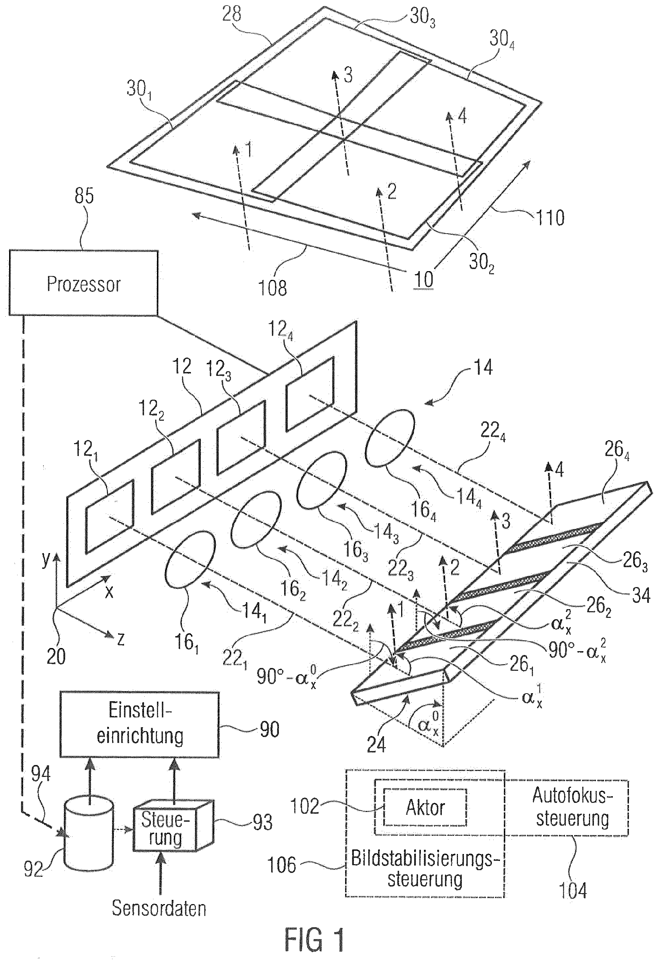

Fig. 1 zeigt ein Ausführungsbeispiel einer Multiaperturabbildungsvorrichtung. Die Multiaperturabbildungsvorrichtung 10 von Fig. 1 umfasst einen Bildsensor 12 und eine Mehrzahl 14 von optischen Kanälen, von denen jeder durch eine jeweilige Optik $16_1$, $16_2$, $16_3$ und $16_4$ definiert wird. Jeder optische Kanal $14_1$, $14_2$, $14_3$, $14_4$ bildet vermittels der zugehörigen Optik $16_1$ - $16_4$ einen kanalindividuellen Ausschnitt eines Gesamtgesichtsfeldes der Multiaperturabbildungsvorrichtung 10 auf einen jeweiligen Bildsensorbereich $12_1$, $12_2$, $12_3$ bzw. $12_4$ des Bildsensors 12 ab, wobei sich die Teilgesichtsfelder teilweise überlappen. Bei dem Bildsensor 12 kann es beispielsweise um einen Chip handeln, der Pixelarrays in den Bildsensorbereichen $12_1$ - $12_4$ aufweist. Alternativ könnte der Bildsensor 12 einen Pixelarraychip pro Bildsensorbereich $12_1$ - $12_4$ aufweisen. Wiederum möglich wäre es, dass der Bildsensor 12 ein Pixelarray aufweist, das sich kontinuierlich über die Bildsensorbereiche $12_1$ - $12_4$ erstreckt, d.h. ein Pixelarray mit rechteckiger oder anders gearteter konvexer Ausdehnung, in welchem sich die Bildsensorbereiche $12_1$ - $12_4$ befinden, wobei in diesem Fall beispielsweise lediglich die Bildsensorbereiche $12_1$ - $12_4$ dieses gemeinsamen kontinuierlichen Pixelarrays des Bildsensors 12 ausgelesen werden. Verschiedene Mischungen dieser Alternativen sind natürlich ebenfalls möglich, wie z.B. das Vorhandensein eines Chips für zwei oder mehr Kanäle und eines weiteren Chips für wiederum andere Kanäle oder dergleichen. In dem Fall mehrerer Chips des Bildsensors 12 können diese beispielsweise auf einer oder mehreren Platinen montiert sein, wie z.B. alle gemeinsam oder gruppenweise oder dergleichen.

Die Optiken $16_1$ - $16_4$ bestehen beispielsweise jeweils aus einer Linse oder einer Gruppe von Linsen.

Vorzugsweise sind die Bildsensorbereiche $12_1$ - $12_4$ in einer gemeinsamen Ebene angeordnet, nämlich der Bildebene der optischen Kanäle 14 bzw. derer Optiken. In Fig. 1 ist diese Ebene exemplarisch parallel zu der Ebene, die durch eine x- und eine y-Achse eines kartesischen Koordinatensystems aufgespannt wird, das in Fig. 1 zur Vereinfachung der nachfolgenden Beschreibung eingezeichnet und mit dem Bezugszeichen 20 versehen ist.

In einer Ebene parallel zum Bildsensor 12, d.h. parallel zur xy-Ebene, sind beispielsweise auch die Optiken $16_1$ - $16_4$ nebeneinander angeordnet. In dem Beispiel von Fig. 1 sind die relativen Positionen der Bildsensorbereiche $12_1$ - $12_4$ in der Bildsensorebene zu dem kongruent zu den relativen Positionen der Optiken $16_1$ - $16_4$ und die Optiken $16_1$ - $16_4$ entlang der x- und y-Achse, d.h. lateral, relativ zu dem Bildsensor 12 so positioniert, dass optische Zentren der Optiken $16_1$ - $16_4$ zentriert zu Zentren der Bildsensorbereiche $12_1$ - $12_4$ angeordnet sind. Das bedeutet, dass bei dem Beispiel von Fig. 1 optische Achsen $22_1$ - $22_4$ der optischen Kanäle $14_1$ - $14_4$ parallel zueinander und parallel zu der z-Achse des Koordinatensystems 20 verlaufen, zu welchen optischen Achsen die Bildsensorbereiche $12_1$ - $12_4$ und die Optiken $16_1$ - $16_4$ zentriert positioniert sind. Es wird darauf hingewiesen, dass zu der bisher beschriebenen Anordnung der Bildsensorbereiche $12_1$ - $12_4$ und der Optiken $16_1$ - $16_4$ auch Alternativen bestehen können. Beispielswäre eine Divergenz der optischen Achsen $22_1$ - $22_4$ ebenfalls denkbar. Alternativen zur einer zunächst parallelen Divergenz der Strahlengänge werden weiter unten erläutert.

Die Optiken $16_1$ - $16_4$ bilden Objekte in einer Szene in verschiedenen, sich teilweise überlappenden Teilgesichtsfeldern der Multiaperturabbildungsvorrichtung 10 auf die zugehörigen Bildsensorbereiche $12_1$ - $12_4$ ab und sind dazu in einer entsprechenden Entfernung bzw. unter einem entsprechenden Abstand von dem Bildsensor 12 positioniert.

Die Mehrzahl 14 von optischen Kanälen $14_1$ - $14_4$ ist als ein einzeiliges Array gebildet. Die optischen Kanäle $14_1$ - $14_4$ sind nebeneinander entlang der x-Achse angeordnet. Die x-Achse entspricht somit der Zeilenerstreckungsrichtung des Arrays 14. Ebenso sind die Bildsensorbereiche $12_1$ - $12_4$ entlang dieser Richtung nebeneinander angeordnet. In Fig. 1 beträgt die Anzahl der optischen Kanäle exemplarisch Vier, aber eine andere Anzahl größer Zwei wäre ebenfalls möglich.

Bei einem linearen Array von optischen Kanälen ist die Größenausdehnung der Multiaperturabbildungsvorrichtung 10, wie sie durch den Bildsensor 12 und die Optiken 16 nach unten hin beschränkt wird, entlang der Zeilenerstreckungsrichtung größer als der Durchmesser eine Linse. Die minimale Ausdehnung der Multiaperturabbildungsvorrichtung 10, wie sie durch die gegenseitige Anordnung von Bildsensor 12 zu Optiken 16 entlang der z-Achse, d.h. entlang der optischen Achsen bzw. Strahlengänge der optischen Kanäle $14_1$ - $14_4$, bestimmt wird, ist zwar kleiner als die minimale Ausdehnung entlang der x-Achse, sie ist aber aufgrund der Ausgestaltung der optischen Kanäle $14_1$ - $14_4$ als einzeiliges Array größer als die Minimalausdehnung der Multiaperturabbildungsvorrichtung in der zu der Zeilenerstreckungsrichtung x senkrechten lateralen Richtung y. Letztere ist durch die laterale Ausdehnung jedes einzelnen optischen Kanals $14_1$ - $14_4$, wie z.B. die Ausdehnung der Optiken $16_1$ - $16_4$ entlang der y-Achse, eventuell inklusive der Halterung 18, gegeben. In dieser Situation mag es abhängig von der Anwendung, d.h. wie z.B. dem Verbau der Multiaperturabbildungsvorrichtung in das Gehäuse einer tragbaren Vorrichtung, wie z.B. eines Mobiltelefons oder dergleichen, bei dem das Gehäuse sehr flach ist, wünschenswert sein, Bildsensor 12 und Optiken $16_1$ - $16_4$ so auszurichten, dass die Gesichtsfelder der optischen Kanäle ohne Strahlumlenkung eigentlich in Richtungen schauen, die von einer eigentlich gewünschten Gesichtsfeldrichtung der Multiaperturabbildungsvorrichtung 10 abweicht. Beispielsweise könnte es wünschenswert sein, die Multiaperturabbildungsvorrichtung 10 so einzubauen, dass Bildsensor 12 und Optiken $16_1$ - $16_4$ senkrecht zu den größten Seiten bzw. den Hauptseiten des flachen Gehäuses ausgerichtet sind, d.h. die optischen Achsen $22_1$ - $22_4$ zwischen Bildsensor 12 und Optiken $16_1$ - $16_4$ parallel zu diesen Hauptseiten liegen, während aber die aufzunehmende Szene in einer Richtung senkrecht dazu liegt, d.h. vor der einen Hauptseite, die beispielsweise die Vorderseite ist und beispielsweise einen Bildschirm aufweist, oder vor der anderen Hauptseite, die beispielsweise die Rückseite des Gehäuses ist.

Aus diesem Grund umfasst die Multiaperturabbildungsvorrichtung 10 eine Strahlumlenkvorrichtung, die die Strahlengänge bzw. die optischen Achsen $22_1$ - $22_4$ der Mehrzahl von optischen Kanäle 14 umlenkt, so dass das Gesamtgesichtsfeld der Multiaperturabbildungsvorrichtung 10 von der Multiaperturabbildungsvorrichtung 10 aus gesehen nicht in der Richtung der z-Achse liegt, sondern woanders. Fig. 1 stellt den exemplarischen Fall dar, dass das Gesamtgesichtsfeld der Multiaperturabbildungsvorrichtung 10 nach Umlenkung im Wesentlichen entlang der y-Achse liegt, d.h. die Umlenkung im Wesentlichen in der zy-Ebene erfolgt.

Wie es im Vorhergehenden beschrieben wurde, sind bei dem Ausführungsbeispiel von Fig. 1 die optischen Achsen $22_1$ - $22_4$ vor der bzw. ohne die Umlenkung durch die Strahlumlenkvorrichtung 24 bzw. an beispielsweise den Optiken $16_1$ - $16_4$ parallel zueinander, wie es in Fig. 1 gezeigt ist, oder aber sie weichen hiervon nur wenig ab. Die damit korrespondierende zentrierte Positionierung von Optiken $16_1$ - $16_4$ sowie der Bildsensorbereiche $12_1$ - $12_4$ ist einfach herzustellen und günstig hinsichtlich der Minimierung des Bauraums. Die Parallelität der Strahlengänge der optischen Kanäle bedingt aber auch, dass sich die Teilgesichtsfelder, die durch die einzelnen Kanäle $14_1$ - $14_N$ abgedeckt bzw. auf die jeweiligen Bildsensorbereiche $12_1$ - $12_4$ abgebildet werden, ohne weitere Maßnahmen, wie nämlich die Strahlumlenkung, nahezu vollständig überlappen würden. Um ein größeres Gesamtgesichtsfeld durch die Multiaperturabbildungsvorrichtung 10 abzudecken, besteht nun eine weitere Funktion der Strahlumlenkvorrichtung 24 von Fig. 1 darin, die Strahlengänge so mit einer Divergenz zu versehen, dass sich die Teilgesichtsfelder der Kanäle $14_1$ - $14_N$ weniger gegenseitig überlappen.

Beispielsweise sei angenommen, dass die optischen Achsen $22_1$ - $22_4$ der Strahlengänge der optischen Kanäle $14_1$ - $14_4$ vor bzw. ohne die Strahlumlenkvorrichtung 24 parallel zueinander sind oder gegenüber einer parallelen Ausrichtung entlang der über alle Kanäle gemittelten Ausrichtung um weniger als ein Zehntel eines minimalen Öffnungswinkels der Teilgesichtsfelder der optischen Kanäle $14_1$ - $14_N$ abweichen. Ohne zusätzliche Maßnahmen überlappten dann die Teilgesichtsfelder größtenteils. Die Strahlumlenkvorrichtung 24 von Fig. 1 umfasst deshalb für jeden optischen Kanal $14_1$ - $14_N$ eine diesem Kanal eindeutig zugeordnete reflektierende Facette $26_1$ - $26_4$, die jeweils optisch planar sind und gegeneinander geneigt sind, nämlich so, dass die Teilgesichtsfelder der optischen Kanäle raumwinkelmäßig weniger überlappen und beispielsweise ein Gesamtgesichtsfeld abdecken, das einen Öffnungswinkel aufweist, der beispielsweise größer ist als 1,5 mal dem Öffnungswinkel der einzelnen Teilgesichtsfelder der optischen Kanäle $14_1$ - $14_N$. In dem exemplarischen Fall von Fig. 1 sorgt die gegenseitige Neigung der reflektierenden Facette $26_1$ - $26_4$ beispielsweise dafür, dass die eigentlich linear entlang der x-Achse nebeneinander angeordneten optischen Kanäle $14_1$ - $14_N$ das Gesamtgesichtsfeld 28 gemäß einer zweidimensionalen Anordnung der Teilgesichtsfelder $30_1$ - $30_4$ abdecken.

Betrachtet man bei dem Ausführungsbeispiel von Fig. 1 die angulare Ablenkung der optischen Achsen $22_1$ - $22_4$ des optischen Kanals $14_1$ - $14_4$ in der Ebene, die durch die gemittelte Richtung der optischen Achsen vor der Strahlumlenkung und der gemittelten Richtung der optischen Achsen nach der Strahlumlenkung aufgespannt wird, d.h. in der xy-Ebene in dem Beispiel von Fig. 1, einerseits und in der Ebene, die senkrecht zu der letztgenannten Eben und parallel zur gemittelten Richtung der optischen Achse nach Strahlumlenkung verläuft, andererseits, so entspricht das Beispiel von Fig. 1 dem exemplarischen Fall, dass die mittlere Richtung nach Strahlumlenkung der y-Achse entspricht. Im Mittel werden die optischen Achsen der optischen Kanäle also um 90° in der yz-Ebene um die x-Achse umgelenkt und im Mittel werden die optischen Achsen nicht aus der yz-Ebene herausgekippt.

Es bezeichnet beispielsweise $\beta_x^1$ den Neigungswinkel der Facette $26_1$ gegenüber der xz-Ebene, gemessen in der yz-Ebene, d.h. die Verkippung der Facette $26_1$ um die x-Achse gegenüber der xz-Ebene, in welcher die optischen Achsen $22_1$ - $22_4$ verlaufen. $\beta_x^1 = 0°$ entspricht einer Ausrichtung der Facette $26_1$ parallel zu der xz-Ebene. Es gilt demzufolge $\alpha_x^1 = 2 \cdot \beta_x^1$. Entsprechend definiere $\beta_z^1$ den Neigungswinkel der Facette $26_1$ gegenüber einer Ebene, die gegenüber der xz-Ebene die Neigung $\beta_x^1$ aufweist und parallel zu der x-Achse verläuft und zwar gemessen entlang der x-Achse. Es gilt demzufolge entsprechend $\alpha_z^1 = 2 \cdot \beta_z^1$. Die gleichen Definitionen sollen für die anderen Kanäle gelten: $\alpha_x^i = 2 \cdot \beta_x^i$, $\alpha_z^i = 2 \cdot \beta_z^i$.

Der bisher beschriebene Aufbau der Multiaperturabbildungsvorrichtung 10 von Fig. 1 betraf quasi eine Wunsch- oder Momentaneinstellung vor bzw. zum Zeitpunkt der Aufnahme eines Gesamtbildes beispielsweise. Die Multiaperturabbildungsvorrichtung 10 von Fig. 1 umfasst beispielsweise einen Prozessor 85, der Bilder, die durch die Bildsensorbereiche $12_1$ - $12_4$ zu beispielsweise einem gleichen Zeitpunkt aufgenommen worden sind, und zwar mit den vorerwähnten Einstellungen, zu einem Gesamtbild zusammenfügt, das die Szene in dem Gesamtgesichtsfeld 28 repräsentiert. Der Algorithmus, den der Prozessor 85 verwendet, um die Bilder, die durch die optischen Kanäle $14_1$ - $14_4$ auf die Bildsensorbereiche $12_1$ - $12_4$ abgebildet und von letzteren aufgenommen worden sind, zusammenzufügen bzw. zu dem Gesamtbild zu verschmelzen, ist beispielsweise so entworfen, dass Annahmen über die Einhaltung bestimmter Parameter der vorbeschriebenen Komponenten der Multiaperturabbildungsvorrichtung 10 eingehalten werden sollten, damit die Qualität des Gesamtbilds eine bestimmte Vorgabe erfüllt oder der Algorithmus überhaupt angewendet werden kann. Beispielsweise geht der Algorithmus von der Einhaltung eines oder mehrerer der folgenden Annahmen aus:

1) Die Optik-zu-Bildsensorbereich-Abstände entlang der z-Achse sind für alle optischen Kanäle $14_1$ - $14_4$ gleich;

2) Die relative Lage der Teilgesichtsfelder $30_1$ - $30_4$ und insbesondere der Überlapp zwischen denselben entspricht einer vorbestimmten Vorgabe oder weicht von letzterer um weniger als eine vorbestimmte Maximalabweichung ab.

Aus unterschiedlichen Gründen kann es nun aber sein, dass eine oder mehrere der soeben genannten Annahmen nicht eingehalten werden oder nicht ausreichend eingehalten werden. Gründe für das Nicht-Einhalten können beispielsweise in der Nicht-Einhaltung von Herstellungsvarianzen bestehen, wie z.B. Ungenauigkeiten der relativen Lagen der Optiken $16_1$ - $16_4$ zueinander und relativ zu dem Bildsensor 12. Herstellungsungenauigkeiten können auch eine Ungenauigkeit des Einbaus der Spiegelumlenkvorrichtung 24 und der relativen Lagen der Facetten $26_1$ - $26_4$ zueinander umfassen. Zusätzlich oder alternativ zu den herstellungsbedingten Toleranzabweichungen können Temperaturschwankungen dafür sorgen, dass eine oder mehrere der oben genannten Annahmen nicht zutreffen oder nicht ausreichend eingehalten wird.

Bis zu einem gewissen Maße kann der durch den Prozessor 85 ausgeführte Algorithmus zur Zusammenfügung bzw. Verschmelzung der Bilder der Bildsensorbereiche $12_1$ - $12_4$ zu dem Gesamtbild ggf. Abweichungen von einer optimalen Ausrichtung und Anordnung der Komponenten ausgleichen, wie z.B. Abweichungen der Positionen der Teilgesichtsfelder $30_1$ - $30_4$ innerhalb des Gesamtgesichtsfeldes 28 von einer Sollkonstellation relativer Lagen der Teilgesichtsfelder zueinander. Beim Zusammenfügen bzw. Verschmelzen der Bilder könnte der Prozessor 85 beispielsweise in einem gewissen Maße solche Abweichungen ausgleichen. Bei Überschreitung gewisser Abweichungsgrenzen jedoch (Nicht-Einhaltung der Annahme 2) würde beispielsweise der Prozessor 85 nicht in der Lage sein, die Abweichungen auszugleichen.

Eine Herstellung der Multiaperturabbildungsvorrichtung 10 so, dass die soeben erwähnten Annahmen stets eingehalten werden, wie z.B. über einen gewissen Temperaturbereich hinweg, tendiert aber dazu, Herstellungskosten der Multiaperturabbildungsvorrichtung 10 zu erhöhen. Um dies zu vermeiden, umfasst die Multiaperturabbildungsvorrichtung 10 von Fig. 1 eine Einstelleinrichtung 90 zum kanalindividuellen Ändern einer relativen Lage zwischen dem Bildsensorbereich $12_i$ eines jeweiligen optischen Kanals $14_i$, der Optik $16_i$ des jeweiligen optischen Kanals $14_i$ und der Strahlumlenkvorrichtung 24 bzw. des entsprechenden Segments $26_i$ derselben oder zum kanalindividuellen Ändern einer optischen Eigenschaft $14_i$ oder einer optischen Eigenschaft des die Umlenkung des Strahlengangs des jeweiligen optischen Kanals betreffenden Segments $26_i$ der Strahlumlenkvorrichtung 24. Die Einstelleinrichtung 90 wird durch Vorgabewerte angesteuert bzw. führt die Einstellungsaufgaben gemäß den Vorgabewerten durch. Diese werden durch einen Speicher 92 und/oder eine Steuerung 93 bereit gestellt, die im Folgenden erläutert werden.

Die Vorrichtung 10 besitzt beispielsweise einen Speicher 92 mit eingespeicherten Vorgabewerten zur kanalindividuellen Ansteuerung der Einstelleinrichtung 90. Die Vorgabewerten können herstellerseitig vorgegeben und in den Speicher 92 eingespeichert sein. Zusätzlich kann der Prozessor 85 beispielsweise, wie es in Fig. 1 mit einer gestrichelten Linie 94 angedeutet ist, über Auswertungen von aufgenommenen Bildern der Bildsensorbereiche $12_1$ - $12_4$, wie z.B. Bildern, die von dem Prozessor 85 zusammenzufügen bzw. zu einem Gesamtbild zu verschmelzen sind, in der Lage sein, die eingespeicherten Vorgabewerte in dem Speicher 92 zu verbessern bzw. zu aktualisieren. Beispielsweise nimmt der Prozessor 85 eine Szene auf, indem die Multiaperturabbildungsvorrichtung 10 über die Einstelleinrichtung 90 mit aktuellen eingespeicherten Vorgabewerten eingestellt wird, wie es im Nachfolgenden noch näher beschrieben wird. Dazu werden die Vorgabewerte aus dem Speicher 92 gelesen und durch die Einstelleinrichtung 90 zur kanalindividuellen Einstellung verwendet. Der Prozessor 85 gewinnt durch Analyse der so aufgenommenen Bilder der Bildsensorbereiche $12_1$ - $12_4$ Informationen darüber, wie die eingespeicherten und soeben zur Aufnahme verwendeten Vorgabewerte in dem Speicher 92 modifiziert werden sollten, um bei der nächsten Aufnahme unter Verwendung dieser verbesserten bzw. aktualisierten Vorgabewerte bei der nächsten Aufnahme zu einer genaueren bzw. verbesserten Einhaltung obiger Annahmen zu führen.

Die eingespeicherten Vorgabewerte können einen vollständigen Satz von Einstellwerten aufweisen, d.h. eine Satz von Einstellwerten, um die Vorrichtung 10 komplett einzustellen. Sie sind wie oben beschrieben und unten weiter ausgeführt ausgewählt, um bestimmte kanalindividuelle Abweichungen der optischen Eigenschaften der Kanäle von einer Sollcharakteristik zu verringern oder zu beseitigen

Es kann sein, dass die Vorgabewerte mehrere Sätze von Einstellwerten, wie z.B. einen pro einer Folge von aneinander anschließenden Temperaturintervallen, aufweisen, so dass für eine Bildaufnahme stets der Satz von Einstellwerten verwendet wird, der für eine aktuelle Situation gerade geeignet ist. Dazu kann beispielsweise die Steuerung 93 einen Zugriff bzw. einen Nachschlag in die Tabelle von Zuordnungen zwischen Vorgabewertsätzen und unterschiedlichen vorbestimmten Situationen in dem Speicher 92 ausführen. Die Steuerung 93 erhält für diesen Zugriff Sensordaten, die die aktuelle Situation widerspiegeln, wie z.B. Daten betreffend Temperatur, Druck, Feuchte, Lage der Vorrichtung 10 im Raum und/oder eine momentane Beschleunigung oder momentane Drehrate der Vorrichtung 10, und bestimmt aus diesen Daten einen aus den mehreren Vorgabewertsätzen in dem Speicher 92, nämlich denjenigen, der der vorbestimmten Situation zugeordnet ist, die der aktuellen Situation, wie sie durch die Sensordaten beschrieben wird, am nächsten kommt. Sensordaten können auch aus den Bildsensordaten der Bildsensorbereiche selbst gewonnen sein. Beispielsweise wird durch die Steuerung 93 ein Satz ausgewählt, in dessen zugehöriges Temperaturintervall die aktuelle Temperatur fällt. Die für eine bestimmte Bildaufnahme durch die Einstelleinrichtung 90 verwendeten Vorgabewerte des ausgewählten Satzes aus dem Speicher 92 können dann wieder aktualisiert werden, wenn die optionale Rückkopplung 94 verwendet wird.

Die eingespeicherten Vorgabenwerte können zum Beispiel derart ausgebildet sein, dass ein Maß für eine Dispersion einer Verteilung eines oder mehrerer Eigenschaften unter den optischen Kanäle durch die Ansteuerung der Einstellvorrichtung mittels der eingespeicherten Vorgabenwerte reduziert wird, nämlich eine transversale Abweichung der Teilgesichtsfelder von einer regelmäßigen Verteilung der Teilgesichtsfelder, Brennweiten der Optiken, oder Schärfentiefentfernungen der optischen Kanäle.

Alternativ könnten die Vorgabwerte in der Steuerung 93 ohne einen Speicher 92 ermittelt werden, nämlich indem beispielsweise in der Steuerung 93 eine Abbildung von den aktuellen Sensordaten auf geeignete Vorgabewerte fest integriert ist. Die Abbildung kann durch einen funktionellen Zusammenhang zwischen Sensordaten und Vorgabewerten beschrieben sein. Der funktionelle Zusammenhang könnte durch Parameter adaptierbar sein. Die Parameter könnten über die Rückkopplung 94 adaptiert werden.

Der Speicher 92 kann beispielsweise ein nichtflüchtiger Speicher sein. Möglicher Weise handelt es sich um einen Nurlesespeicher, aber ein wiederbeschreibbarer Speicher ist ebenfalls möglich. Die Steuerung 93 und der Prozessor 85 können in Software, Hardware oder in programmierbarer Hardware implementiert sein. Es kann sich um auf einem gemeinsamen Mikroprozessor ausgeführte Programme handeln. Die Sensoren zur Lieferung der Sensordaten für die Steuerung 93 können zur Vorrichtung 10 gehören, wie z.B. die Bildsensorbereiche, oder aber externe Komponenten sein, wie Komponenten des Geräts, in das die Vorrichtung eingebaut ist, wie es bezüglich nachfolgender Figuren noch erläutert wird.

Nachfolgend werden nun mögliche Ausgestaltungen für die Einstelleinrichtung 90 beschrieben. Die Einstelleinrichtung 90 von Fig. 1 kann dabei auf eine, mehrere oder alle der nachfolgend beschriebenen Ausgestaltungsvarianten zutreffen. Auf spezielle Kombinationen wird ebenfalls nachfolgend eingegangen.

In der gezeigten Variante umfasst die Einstelleinrichtung 90 beispielsweise einen Aktor $96_i$ für jeden Kanal $14_i$, der die Optik $16_i$ des entsprechenden Kanals $14_i$ in axialer Richtung entlang der optischen Achse $22_i$ bzw. längs des Strahlengangs und/oder transversal bzw. quer dazu entlang der x-Achse und/oder der y-Achse bewegt. Alternativ könnte der Aktor $96_i$ beispielsweise auch den Bildsensor $12_i$ bewegen. Ganz allgemein könnte der Aktor $96_i$ eine relative Bewegung von Bildsensorbereich $12_i$, Optik $16_i$ und/oder dem entsprechenden Segment $26_i$ der Strahlumlenkvorrichtung 24 bewirken.

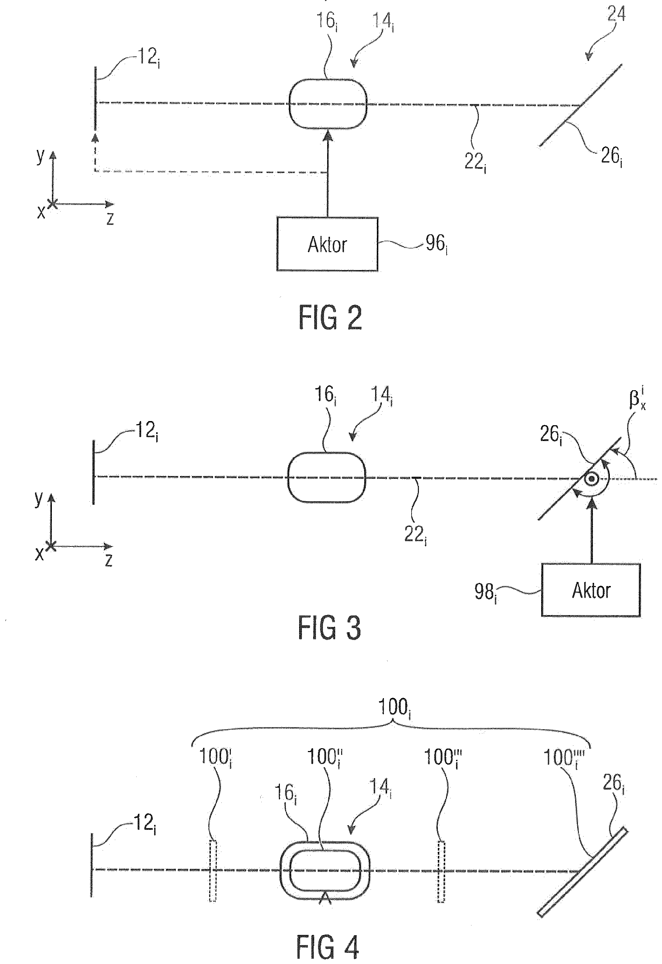

Gemäß der Variante, die in Fig. 3 dargestellt ist, umfasst die Einstelleinrichtung 90 für jeden Kanal $14_i$ einen Aktor $98_i$, der das Segment $26_i$, wie z.B. die reflektierende Facette des jeweiligen Kanals $14_i$, in seiner Winkelorientierung bezüglich der optischen Achse $22_i$ ändert, d.h. den Anstellwinkel $\beta_x^i$. Dabei sei erwähnt, dass das Segment $26_i$ nicht auf eine reflektierende Facette, wie in Fig. 1 angedeutet, beschränkt ist. Jedes Segment $26_i$ könnte auch als Prisma ausgebildet sein, das die Richtung der optischen Achse $22_i$ in der yz-Ebene umlenkt, während das Prisma von dem Strahlengang des optischen Kanals $14_i$ durchlaufen wird.

Zur Realisierung der relativen Bewegungen durch die Aktoren $96_i$ bzw. $98_i$ von Fig. 2 bzw. Fig. 3, d.h. zur Erzeugung der Bewegung der Optik $16_i$, die beispielsweise translatorisch ausgeführt sein kann, sowie zum Verkippen des Segments $26_i$ durch den Aktor $98_i$ und die x-Achse, kann beispielsweise ein pneumatischer, hydraulischer, piezoelektrischer, thermischer, elektrostatischer oder elektrodynamischer Antrieb oder ein DC- oder Schrittmotor oder wiederum ein Tauchspulenantrieb verwendet werden.

Gemäß einer weiteren Variante, auf die sich Fig. 4 bezieht, umfasst die Einstelleinrichtung 90 ein phasenänderndes optisches Element bzw. ein Phasenänderungselement $100_i$ für jeden Kanal $14_i$, das, wie in Fig. 4 angedeutet, in die jeweilige Optik $16_i$ integriert sein kann ($100_i''$), in das Segment $26_i$ integriert sein kann ($100_i''''$), zwischen Bildsensorbereich $12_i$ und Optik $16_i$ ($100_i'$) oder zwischen Optik $16_i$ und Strahlumlenkvorrichtungssegment $26_i$ ($100_i'''$) positioniert sein kann, wobei auch Kombinationen der vorerwähnten Möglichkeiten möglich sind. Das phasenändernde optische Element $100_i$ kann beispielsweise eine ortsabhängige Änderung eines Brechungsindex bewirken, wie z.B. durch Flüssigkeitskristalle. Alternativ oder zusätzlich bewirkt das phasenändernde optische Element $100_i$ eine Änderung der Form einer optisch aktiven Oberfläche, wie z.B. durch Nutzung von Piezos, die auf flexible, feste, transparente Materialien mechanisch einwirken und eine Verformung bewirken oder durch Nutzung des Elektrobenetzungseffekts. Das Phasenänderungselement $100_i''$ könnte beispielsweise den Brechungsindex der Optik $16_i$ ändern. Alternativ könnte das Phasenänderungselement $100_i''$ eine Form einer optischen Linsenfläche der Optik $16_i$ verändern und dadurch die effektive Brechkraft der Optik $16_i$ verändern. Das Phasenänderungselement $100_i''''$ könnte beispielsweise auf einer optisch relevanten Oberfläche der Segmente $26_i$, wie z.B. auf der reflektiven Facette, ein sinusförmiges Phasengitter erzeugen, um eine virtuelle Verkippung der entsprechenden Oberfläche zu bewirken. Auf ähnliche Weise könnte das Phasenänderungselement $100_i'$ oder Phasenänderungselement $100_i''$ die optische Achse umlenken.

In anderen Worten ausgedrückt, kann die Phasenänderung, die durch das phasenändernde optische Element $100_i$ bewirkt wird, weitgehend rotationssymmetrisch, wie z.B. rotationssymmetrisch um die optische Achse $22_i$ sein, und somit in dem Fall $100_i''$ beispielsweise eine Änderung der Brennweite der Optik $16_i$ bewirken. Die Phasenänderung, die durch das

Element $100_i$ bewirkt wird, kann allerdings auch weitgehend linear sein, wie z.B. linear entlang der x-Achse oder linear entlang der y-Achse, um eine Änderung des Ablenkwinkels bzw. eine Ablenkung der optischen Achse $22_i$ in der entsprechenden Richtung zu bewirken.

Die rotationssymmetrische Phasenänderung kann zur Fokussierung verwendet werden, und die lineare Phasenänderung zur Lagekorrektur des Teilgesichtsfeldes des entsprechenden optischen Kanals $14_i$.

Die bezugnehmend auf die Fig. 2 bis 4 vorgestellten Aktoren $96_i$, $98_i$, und $100_i$ stehen stellvertretend auch für andere mögliche Arten von Aktoren. Von jeder Art könnte einer pro Kanal $14_i$ vorhanden sein, und diese wären dann jeweils getrennt individuell durch die Vorgabewerte in dem Speicher ansteuerbar und/oder die vorliegenden aktuellen Bildsensordaten, die Daten weiterer Sensoren, wie z.B. für Temperatur, Druck, Feuchte, Lage im Raum, Beschleunigung u.a. werden einbezogen. Wie gesagt kann lediglich einer oder ein Teil der veranschaulichten Aktoren in einer Vorrichtung 10 vorhanden sein, und ein vorhandener Aktor kann alternativ in zumindest einem oder in zumindest zwei Kanälen zur individuellen Anpassung des jeweiligen Kanals vorhanden sein.

Mischformen wären natürlich ebenfalls möglich, welche Mischformen dann eine gleichzeitige Ablenkung und Brennweitenänderung bewirken.

Zurückkehrend zur Fig. 1 ist mit gestrichelten Linien angedeutet, dass die Multiaperturabbildungsvorrichtung 10 optional zusätzlich zu der Einstelleinrichtung 90 einen oder mehrere Aktoren 102 zum Erzeugen einer kanalglobalen, d.h. für alle optischen Kanäle $14_1$ -$14_4$ gleiche, Relativbewegung zwischen Bildsensor 12, Optikarray 14 und Strahlumlenkvorrichtung 24 umfassen kann. Der eine oder die mehreren zusätzlichen Aktoren 102 kann/können dabei, wie es in Fig. 1 angedeutet ist, Teil einer optional vorhandenen Autofokussteuerung 104 und/oder einer optional vorhandenen Bildstabilisierungssteuerung der Multiaperturabbildungsvorrichtung sein.

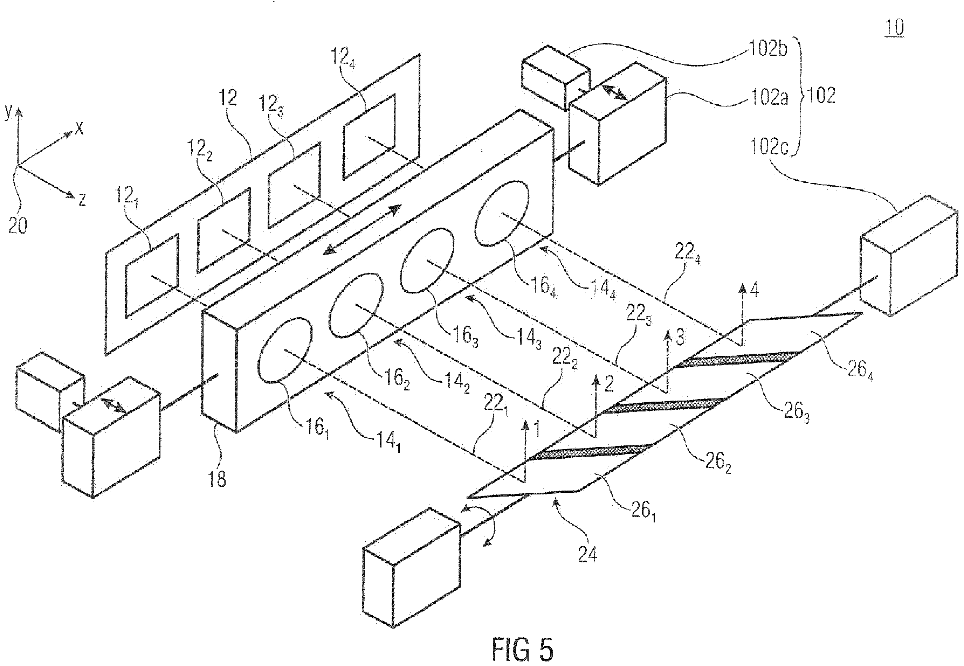

Ein konkretes Beispiel einer um zusätzliche Aktoren ergänzten Vorrichtung 10 von Fig. 1 ist in Fig. 5 gezeigt. Fig. 5 zeigt die Multiaperturabbildungsvorrichtung 10 von Fig. 1, wobei die Optiken $16_1$ - $16_4$ der optischen Kanäle $14_1$ - $14_4$ über einen gemeinsamen Träger 18 gegeneinander mechanisch fixiert sind. Der gemeinsame Träger 18 kann beispielsweise, wie es in Fig. 5 auch veranschaulicht ist, ein transparentes Substrat sein, an welchem die Optiken $16_1$ - $16_4$ gebildet sind, wie z.B. der Abformung, Aufkleben oder dergleichen, wobei die Strahlengänge bzw. optischen Achsen $22_1$ - $22_4$ durch das Substrat 18 verlaufen. Alternativ ist es möglich, dass der Träger 18 ein aus beispielsweise einem nichttransparenten Material gebildeter Träger ist, der für jeden Kanal $14_1$ - $14_4$ eine Öffnung aufweist, in welcher die dem jeweiligen Kanal zugeordnete $16_1$ - $16_4$ fixiert ist. Über diesen gemeinsamen Halter ist es nun möglich, die Optiken $16_1$ - $16_4$ einer globalen für alle Kanäle gleichen Bewegung zu unterziehen, wie z.B. durch eine translatorische Bewegung des Trägers 18 in der x-Richtung, d.h. entlang der Zeilenerstreckungsrichtung des Arrays 14. Hierzu ist ein Aktor 102a vorgesehen. Der Aktor 102a erzeugt also eine translatorische Bewegung der Optiken $16_1$ - $16_4$, die für alle optischen Kanäle $14_1$ - $14_4$ gleich ist, indem der Aktor 102a den gemeinsamen Träger 18 der translatorischen Bewegung entlang der x-Achse unterzieht. Hinsichtlich des Typs von Aktor 102a wird auf die Beispiele hingewiesen, auf die Bezug nehmend auf die Fig. 2 und 3 hingewiesen wurde. Ferner umfasst die Vorrichtung 10 von Fig. 5 einen Aktor 102b zum kanalglobalen, d.h. für alle optischen Kanäle $14_1$ - $14_4$ gleichen, Ändern des Bildsensor-$12_i$-zu-Optik-$16_i$-Abstands entlang der z-Achse bzw. entlang der optischen Achse $22_i$. Wie es in Fig. 5 angedeutet ist, unterzieht beispielsweise der Aktor 102b die Optiken $16_1$ - $16_4$ der translatorischen Bewegung entlang der z-Achse zur Änderung des Abstands von den zugeordneten Bildsensorabschnitten $12_1$ - $12_4$ nicht über den Träger 18, sondern auch via den Aktor 102a, der somit ebenfalls der translatorischen Bewegung entlang der z-Achse unterzogen wird und quasi als Aufhängung für den Träger 18 dient.

Zusätzlich umfasst die Vorrichtung 10 von Fig. 5 einen Aktor 102c zum Drehen der Strahlumlenkvorrichtung 24 um eine Achse, die parallel zur x-Achse verläuft und in oder nicht weit entfernt von der Ebene liegt, in welcher die optischen Achsen $22_1$ - $22_4$ verlaufen. Auch bezüglich der Aktoren 102b und 102c wird bezüglich möglicher Implementierungsbeispiele auf die Auflistung von Beispielen verwiesen, die Bezug nehmend auf die Fig. 2 und 3 im Vorhergehenden geliefert wurde. Die Rotationsbewegung bzw. Drehbewegung, die durch den Aktor 102c auf die Strahlumlenkvorrichtung 24 ausgeübt wird, wirkt sich auf die Segmente $26_1$ - $26_4$ der Strahlumlenkvorrichtung 24 für alle Kanäle $14_1$ - $14_4$ gleichermaßen aus, d.h. ist kanalglobal. Beispielsweise handelt es sich bei der Strahlumlenkvorrichtung um einen Facettenspiegel oder um ein Prisma mit entsprechenden Segmenten $26_1$ - $26_4$.

Über den Aktor 102b ist nun die Autofokussteuerung 104 beispielsweise in der Lage, den Fokus einer Aufnahme durch die Vorrichtung 10 vermittels der Kanäle $14_1$ - $14_4$ im kanalglobalen Sinne zu steuern. Die Bildstabilisierungssteuerung 106 ist in der Lage, das Gesamtgesichtsfeld 28 vermittels des Aktors 102c in einer ersten Richtung 108 und vermittels des Aktors 102a in einer dazu senkrechten Richtung 110 vor Verwacklungen durch einen Benutzer beispielsweise zu stabilisieren.

Beispielsweise weist dazu die Vorrichtung 10 von Fig. 5 für jeden Kanal $14_1$ - $14_4$ einen Aktor gemäß Fig. 2, nämlich einen Aktor $96_i$ für jeden Kanal $14_i$ auf, um die Bildsensorbereiche $12_1$ - $12_4$ kanalindividuell einer translatorischen Bewegung entlang der x-Achse und/oder entlang der y-Achse zu unterziehen, um beispielsweise Herstellungsungenauigkeiten oder temperaturbedingte Drifts der Teilgesichtsfelder innerhalb des Gesamtgesichtsfeldes auszugleichen. Die Vorrichtung 10 von Fig. 5 könnte alternativ oder zusätzlich einen Aktor

$100_i$" aufweisen, um Brennweitenunterschiede der Optiken $16_1$ - $16_4$, die herstellungsbedingt unerwünschter Weise aufgetreten sind, auszugleichen. Zusätzlich oder alternativ kann die Vorrichtung 10 von Fig. 5 einen Aktor $100_i$"' aufweisen, um herstellungsbedingt oder temperaturbedingt entstandene Abweichungen der relativen Neigungen der Segmente $26_1$ - $26_4$ untereinander so zu kompensieren, dass die relativen Neigungen zu der gewünschten Abdeckung des Gesamtgesichtsfeldes 28 durch die Teilgesichtsfelder $30_1$ - $30_4$ führen. Zusätzlich oder alternativ kann die Vorrichtung 10 dann schließlich noch Aktoren des Typs $100_i$' bzw. $100_i$"' aufweisen.

Noch einmal zusammenfassend kann die Vorrichtung 10 also einen Aktor 102c aufweisen, der ausgebildet ist, um die Strahlumlenkvorrichtung 24 um eine Achse zu drehen, die parallel zu der Zeilenerstreckungsrichtung x des Arrays 14 ist. Die Drehachse liegt beispielsweise in der Ebene der optischen Achsen $22_1$ - $22_4$ oder davon weniger als ein Viertel eines Durchmessers der Optiken $16_1$ - $16_4$ entfernt. Alternativ wäre es natürlich auch möglich, dass die Drehachse weiter entfernt liegt, wie z.B. weniger als ein Optikdurchmesser oder weniger als vier Optikdurchmesser. Der Aktor 102c kann beispielsweise vorgesehen sein, um die Strahlumlenkvorrichtung 24 mit kurzer Ansprechzeit in einem lediglich kleinen Winkelbereich, wie z.B. innerhalb einer Spanne von weniger als 5° oder weniger als 10° zu drehen, um Verwacklungen der Multiaperturabbildungsvorrichtung 10 durch beispielsweise einen Benutzer während einer Aufnahme auszugleichen. Der Aktor 102c würde in diesem Fall beispielsweise von der Bildstabilisierungssteuerung angesteuert werden.

Alternativ oder zusätzlich könnte Aktor 102c ausgebildet sein, um mit größeren Winkelverstellungen das Gesamtgesichtsfeld 28, das durch die Gesamtabdeckung der Teilgesichtsfelder $30_1$ - $30_4$ (Fig. 1) definiert wird, in seiner Richtung zu verändern. Dabei wäre es ferner möglich, dass durch Rotation der Strahlumlenkvorrichtung 24 auch Ablenkungen erzielt werden, bei denen das Gesamtgesichtsfeld in der entgegengesetzten Richtung relativ zu der Vorrichtung 10 angeordnet ist, indem beispielsweise die Strahlumlenkvorrichtung 24 als ein beidseitig reflektives Spiegelarray ausgebildet ist.

Wiederum alternativ oder zusätzlich kann die Vorrichtung 10 einen Aktor 102a aufweisen, der ausgebildet ist, um die Optiken $16_1$ - $16_4$ vermittels des Substrats 18 bzw. das Substrat 18 selbst und damit die Optiken $16_1$ - $16_4$ translatorisch entlang der Zeilenerstreckungsrichtung zu bewegen. Der Aktor 102a könnte beispielsweise ebenfalls durch die vorerwähnte Bildstabilisierungssteuerung angesteuert werden, um durch die Bewegung 53 entlang der Zeilenerstreckungsrichtung eine Bildstabilisierung quer zu der Bildstabilisierung zu erzielen, die durch die Rotation der Spiegelumlenkvorrichtung 24 verwirklicht wird.

Weiterhin kann zusätzlich oder alternativ die Vorrichtung 10 einen Aktor 102b zum Verändern des bildseitigen Abstands zwischen Bildsensor 12 und Optiken

$16_1$ - $16_4$ bzw. zwischen Bildsensor 12 und Körper 18 aufweisen, um eine Schärfentiefeneinstellung zu erzielen. Die Einrichtung 54 kann durch eine manuelle Benutzersteuerung oder durch eine Autofokussteuerung der Vorrichtung 10 gesteuert werden.

Der Aktor 102a dient also als Aufhängung des Substrats 18 und ist vorzugsweise, wie in Fig. 5 angedeutet seitlich neben dem Substrat 18 entlang der Zeilenerstreckungsrichtung angeordnet, um die Bauhöhe nicht zu erhöhen. Auch für die Aktoren 102b und 102c gilt, dass selbige vorzugsweise in der Ebene der optischen Strahlengänge angeordnet sind, um die Bauhöhe nicht zu erhöhen.

Es sei darauf hingewiesen, dass die Optiken $16_1$ - $16_4$ nicht nur untereinander, wie z.B. über das schon erwähnte transparente Substrat, sondern auch relativ zu der Strahlumlenkvorrichtung in konstanter relativer Lage gehaltert sein können, wie z.B. über einen geeigneten Rahmen, der vorzugsweise die Bauhöhe nicht vergrößert und deshalb vorzugsweise in der Ebene der Komponenten 12, 14 und 24 bzw. in der Ebene der Strahlengänge verläuft. Die Konstanz der relativen Lage könnte sich auf den Abstand zwischen Optiken und Strahlumlenkvorrichtung entlang der optischen Achsen beschränken, so dass der Aktor 102b beispielsweise die Optiken $16_1$ - $16_4$ zusammen mit der Strahlumlenkvorrichtung 24 translatorisch entlang der optischen Achsen bewegt. Der Optiken-zu-Strahlumlenkvorrichtung-Abstand könnte auf einen minimalen Abstand eingestellt sein, so dass der Strahlengang der Kanäle nicht durch die Segmente der Strahlumlenkvorrichtung 24 lateral eingeschränkt wird, was die Bauhöhe verringert, da andernfalls die Segmente $26_i$ hinsichtlich der lateralen Ausdehnung für den größten Optiken-zu-Strahlumlenkvorrichtung-Abstand dimensioniert sein müssten, um den Strahlengang nicht einzuschneiden. Zusätzlich könnte die Konstanz der relativen Lage bedeuten, dass vorerwähnter Rahmen die Optiken und die Strahlumlenkvorrichtung entlang der x-Achse starr zueinander haltert, sodass der Aktor 102a die Optiken $16_1$ - $16_4$ zusammen mit der Strahlumlenkvorrichtung translatorisch entlang der Zeilenerstreckungsrichtung bewegen würde.

Die oben beschriebene Strahlumlenkvorrichtung 24 zum Umlenken des Strahlengangs der optischen Kanäle ermöglicht zusammen mit dem Aktor 102c zur Erzeugung der Rotationsbewegung der Strahlumlenkvorrichtung 24 und dem Aktor 102a einer optischen Bildstabilisierungssteuerung der Multiaperturabbildungsvorrichtung 10 eine Bild- bzw. Gesamtbildfeldstabilisierung in zwei Dimensionen, nämlich durch die translatorische Bewegung des Substrats 18 eine Bildstabilisierung entlang einer ersten Bildachse, die im Wesentlichen parallel zur Zeilenerstreckungsrichtung verläuft, , und durch die Erzeugung der Rotationsbewegung der Strahlumlenkvorrichtung 24 eine Bildstabilisierung entlang einer zweiten Bildachse, die im Wesentlichen parallel zu den optischen Achsen vor bzw. ohne Strahlumlenkung verläuft, oder - betrachtet man die umgelenkten optischen Achsen - senkrecht zu den optischen Achsen und der Zeilenerstreckungsrichtung. Zusätzlich kann die beschriebene Anordnung eine translatorische Bewegung der im angesprochenen Rahmen fixierten Strahlumlenkvorrichtung und des Arrays 14 senkrecht zur Zeilenerstreckungsrichtung bewirken, wie z.B. durch den beschriebenen Aktor 54, die für die Realisierung einer Fokuseinstellung und damit einer Autofokusfunktion genutzt werden kann.

Es sei zu den obigen Ausführungen der Vollständigkeit halber noch darauf hingewiesen, dass die Vorrichtung bei einer Aufnahme über die Bildsensorbereiche ein Bild einer Szene pro Kanal aufnimmt, die durch die Kanäle auf die Bildsensorbereiche abgebildet worden, sind, und dass die Vorrichtung optional über einen Prozessor, wie z.B. den Prozessor 85, verfügen kann, der die Bilder zu einem Gesamtbild zusammenfügt oder verschmelzt, das der Szene in dem Gesamtgesichtsfeld entspricht, und/oder zusätzliche Daten bereitstellt, wie zum Beispiel 3D-Bilddaten und Tiefeninformationen der Objektszene zur Erstellung von Tiefenkarten und zur softwaretechnischen Realisierung wie z.B. von Refocusing (Festlegung der Bildschärfebereiche nach der eigentlichen Aufnahme), All-in-Focus-Bildern, Virtual Green Screen (Trennung von Vorder- und Hintergrund) u.a.. Letztere Aufgaben könnten ebenfalls von jenem Prozessor erledigt werden oder extern. Der Prozessor könnte allerdings auch eine zu der Multiaperturvorrichtung externe Komponente darstellen.

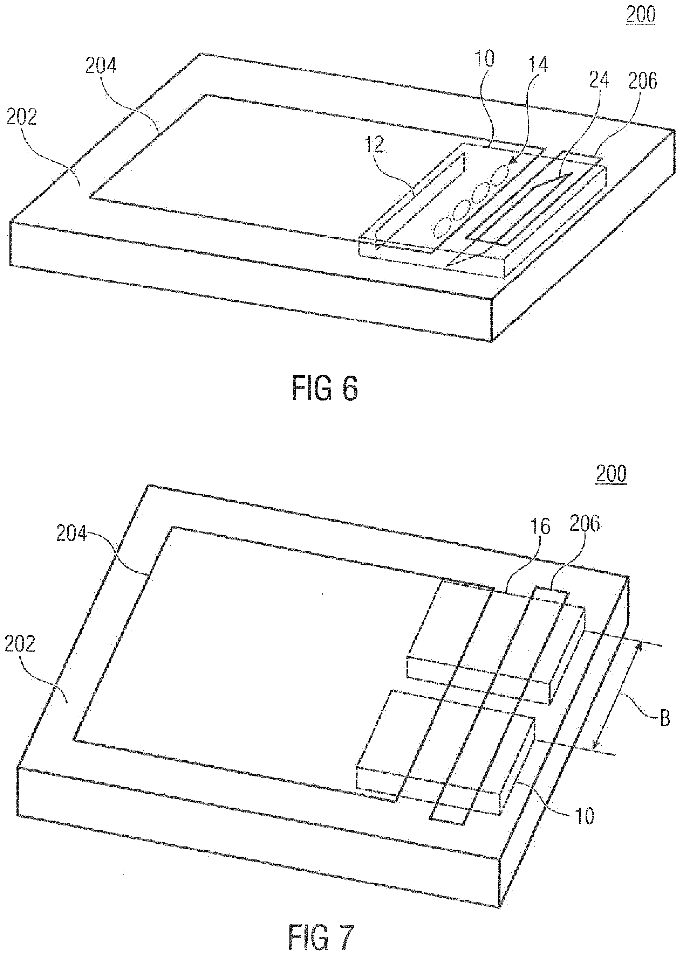

Fig. 6 illustriert, dass Vorrichtungen 10 der vorher beschrieben Alternativen beispielsweise in einem flachen Gehäuse eines tragbaren Geräts 200 eingebaut sein können, wie zum Beispiel eines Mobiltelefons, ein Smartphone oder Mediaplayers oder dergleichen, wobei dann beispielsweise die Ebenen des Bildsensors 12 bzw. der Bildsensorbereiche und die Linsenebenen der Optiken der Kanäle 14 senkrecht zu der flachen Erstreckungsrichtung des flachen Gehäuses bzw. parallel zur Dickenrichtung ausgerichtet sind. Auf diese Weise würde beispielsweise die Strahlumlenkvorrichtung 24 dafür sorgen, dass das Gesamtgesichtsfeld der Multiaperturabbildungsvorrichtung 10 vor einer Vorderseite 202 des flachen Gehäuses liegt, das beispielsweise auch einen Bildschirm aufweist. Alternativ wäre auch eine Umlenkung derart möglich, dass sich das Gesichtsfeld vor einer Rückseite des flachen Gehäuses, die der Vorderseite 202 gegenüberliegt, befindet. Das Gehäuse könnte ein transparentes Fenster 206 in der durchdrungenen Seite 202 aufweisen, um die Strahlengänge der optischen Kanäle 14 durchzulassen. Es können weiterhin schaltbare Blenden (mechanisch bewegt, elektrochrom) angebracht sein, um den Lichteintritt durch die Öffnung des Fensters auf der Vorder- und/oder der Rückseite zu beeinflussen. Das Gehäuse des Geräts 200 bzw. das Gerät selbst kann flach sein, da durch die illustrierte Lage der Vorrichtung 10 in dem Gehäuse, die Bauhöhe der Vorrichtung 10, die zur Dicke des Gehäuses parallel ist, gering gehalten werden kann. Eine Umschaltbarkeit könnte ebenfalls vorgesehen werden, indem ein Fenster auf der der Seite 202 gegenüberliegenden Seite vorgesehen wird und beispielsweise die Strahlumlenkvorrichtung zwischen zwei Stellungen bewegt wird, indem letztere beispielsweise als Vor- und rückseitig spiegelnder Spiegel ausgeführt wird, wie es in Fig. 9 gezeigt war, und von der einen in die andere Stellung gedreht wird, oder als Facettenspiegel mit einem Satz von Facetten für die eine Stellung und einem anderen Satz von Facetten für die andere Stellung, wobei die Facettensätze in Zeilenerstreckungsrichtung nebeneinander liegen und durch translatorische Hin- und Her-Bewegung der Strahlumlenkvorrichtung entlang der Zeilenerstreckungsrichtung zwischen den Stellungen umgeschaltet wird. Ein Verbau der Vorrichtung 10 in ein anderes ggf. nicht tragbares Gerät, wie z.B. eine Auto, wäre natürlich ebenfalls möglich. Fig. 7 zeigt noch, dass mehrere Module 10, deren Teilgesichtsfelder ihrer Kanäle das gleiche Gesichtsfeld vollständig und optional sogar in kongruenter Weise abdecken, beispielsweise mit einem Basisabstand B zueinander entlang einer für beide Module gleichen Zeilenerstreckungsrichtung in dem Gerät 200 verbaut sein können, wie zum Beispiel zum Zweck der Stereoskopie. Mehr als zwei Module wären ebenfalls denkbar. Die Zeilenerstreckungsrichtungen der Module 10 könnten auch nicht kollinear, sondern lediglich parallel zueinander sein. Es sei jedoch noch einmal erwähnt, dass, wie im vorgehenden erwähnt, auch eine Vorrichtung 10 bzw. ein Modul mit Kanälen so ausgestattet sein könnte, dass dieselben gruppenweise dasselbe Gesamtgesichtsfeld jeweils vollständig abdecken.

Es wurde bereits weiter oben darauf hingewiesen, dass die Strahlengänge bzw. optischen Achsen von einer Parallelität vor bzw. Strahlumlenkung abweichen sein könnten. Dieser Umstand wird im Folgenden damit umschrieben, dass die Kanäle mit einer Art Vorab-Divergenz versehen sein können. Mit dieser Vorab-Divergenz der optischen Achsen $22_1$ - $22_4$ wäre es möglich, dass sich beispielsweise nicht alle Facettenneigungen unterscheiden, sondern dass manche Gruppen von Kanälen beispielsweise die Facetten mit gleicher Neigung besitzen. Letztere können dann einstückig bzw. kontinuierlich ineinander übergehend gebildet werden, quasi als eine Facette, die dieser Gruppe von in Zeilenerstreckungsrichtung benachbarten Kanälen zugeordnet ist. Die Divergenz der optischen Achsen dieser Kanäle könnte dann von der Divergenz dieser optischen Achsen stammen, wie sie durch lateralen Versatz zwischen optischen Zentren der Optiken und Bildsensorbereichen der Kanäle erzielt wird. Die Vorab-Divergenz könnte sich beispielsweise auf eine Ebene beschränken. Die optischen Achsen könnten beispielsweise vor bzw. ohne Strahlumlenkung in einer gemeinsamen Ebene verlaufen, aber in dieser divergent, und die Facetten bewirken lediglich nur noch eine zusätzliche Divergenz in der Anderen Transversalebene, d.h. sind alle parallel zur Zeilenerstreckungsrichtung und gegeneinander nur noch unterschiedlich zur vorerwähnten gemeinsamen Ebene der optischen Achsen geneigt, wobei hier wiederum mehrere Facetten gleichen Neigung besitzen können bzw. einer Gruppe von Kanälen gemeinsam zugeordnet sein könnten, deren optischen Achsen sich beispielsweise bereits in der vorerwähnten gemeinsamen Ebene der optischen Achsen paarweise vor bzw. ohne Strahlumlenkung unterscheiden.

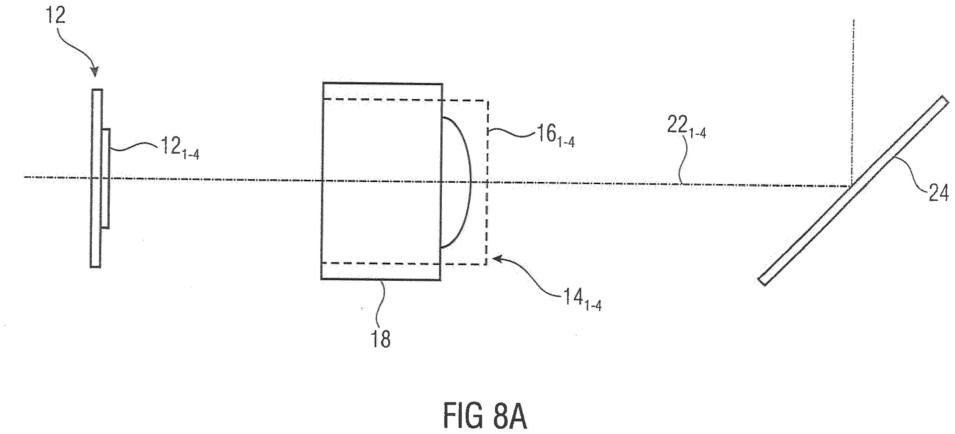

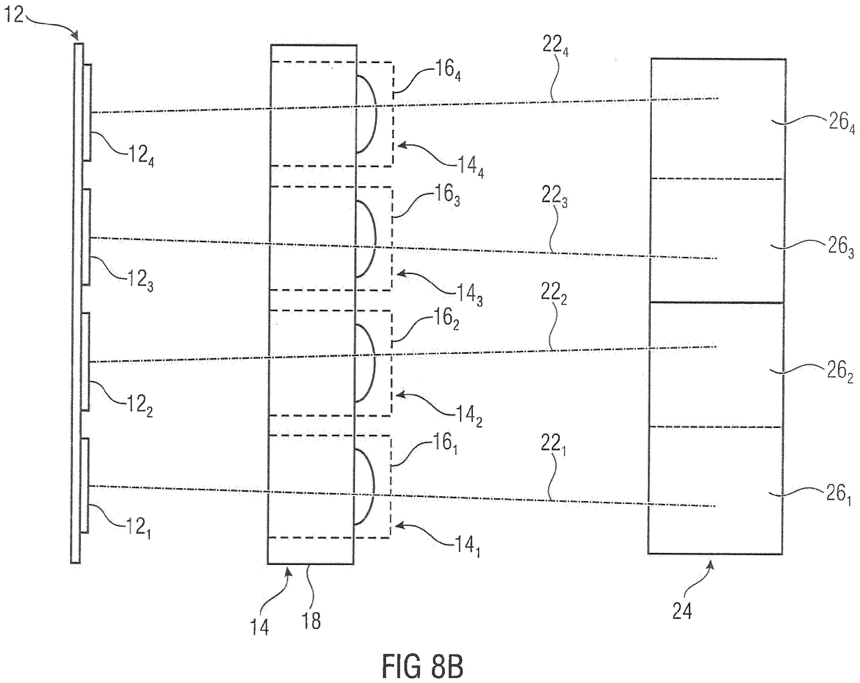

Die erwähnte möglicher Weise vorliegende Vorab-Divergenz kann beispielsweise erzielt werden, indem die optischen Zentren der Optiken auf einer Geraden entlang der Zeilenerstreckungsrichtung liegen, während die Zentren der Bildsensorbereiche von der Projektion der optischen Zentren entlang der Normalen der Ebene der Bildsensorbereiche auf Punkte auf einer Geraden in der Bildsensorebene abweichend angerordnet sind, wie z.B. an Punkten, die von den Punkten auf vorerwähnter Gerade in der Bildsensorebene kanalindividuell entlang der Zeilenerstreckungsrichtung und/oder entlang der Richtung senkrecht zur sowohl der Zeilenerstreckungsrichtung als auch der Bildsensornormalen abweichen. Alternativ kann Vorab-Divergenz erzielt werden, indem die Zentren der Bildsensoren auf einer Geraden entlang der Zeilenerstreckungsrichtung liegen, während die Zentren der Optiken von der Projektion der optischen Zentren der Bildsensoren entlang der Normalen der Ebene der optischen Zentren der Optiken auf Punkte auf einer Geraden in der Optikzentrenebene abweichend angerordnet sind, wie z.B. an Punkten, die von den Punkten auf vorerwähnter Gerade in der Optikzentrenebene kanalindividuell entlang der Zeilenerstreckungsrichtung und/oder entlang der Richtung senkrecht zur sowohl der Zeilenerstreckungsrichtung als auch der Normalen der Optikzentrenebene abweichen. Es wird bevorzugt, wenn vorerwähnte kanalindividuelle Abweichung von der jeweiligen Projektion lediglich in Zeilenerstreckungsrichtung verläuft, also die optischen Achsen sich lediglich in einer gemeinsamen Ebene befinden mit einer Vorabdivergenz verwehen werden. Sowohl optische Zentren als auch Bildsensorbereichszentren liegen dann jeweils auf einer Geraden parallel zur Zeilenerstreckungsrichtung, aber mit unterschiedlichen Zwischenabständen. Ein lateraler Versatz zwischen Linsen und Bildsensoren in senkrechter lateraler Richtung zur Zeilenerstreckungsrichtung führte demgegenüber zu einer Vergrößerung der Bauhöhe. Ein rein In-Ebene-Versatz in Zeilenerstreckungsrichtung ändert die Bauhöhe nicht, aber er resultieren ggf. weniger Facetten und/oder die Facetten weisen nur eine Kippung in einer Winkelorientierung auf, was den Aufbau vereinfacht. Das ist in Fig. 8a und 8b exemplarischen für den Fall der auf einem gemeinsamen Träger gehalterten Optiken gemäß Fig. 5 veranschaulicht, bei denen die benachbarten Kanäle $14_1$ und $14_2$ einerseits und die benachbarten Kanäle $14_3$ und $14_4$ in der gemeinsamen Ebene verlaufende, jeweils gegeneinander schielende, also mit einer Vorab-Divergenz versehene, optische Achsen $14_1$ und $14_2$ bzw. $14_3$ und $14_4$ aufweisen. Die Facetten $26_1$ und $26_2$ können durch eine Facette gebildet werden und die Facetten $26_3$ und $26_4$ können durch eine andere Facette gebildet werden, wie es durch gestrichelte Linien zwischen den jeweiligen Paaren von Facetten gezeigt ist, und die einzigen zwei Facetten sind lediglich in einer Richtung geneigt und beide parallel zur Zeilenerstreckungsrichtung.

Ferner könnte es vorgesehen sein, dass manche optische Kanäle dem gleichen Teilgesichtsfeld zugeordnet sind, wie z.B. zum Zwecke der Superresolution bzw. zur Erhöhung der Auflösung, mit welcher das entsprechende Teilgesichtsfeld durch diese Kanäle abgetastet wird. Die optischen Kanäle innerhalb einer solchen Gruppe verliefen dann beispielsweise vor Strahlumlenkung parallel und würden durch eine Facette auf ein Teilgesichtsfeld umgelenkt werden. Vorteilhafter Weise lägen Pixelbilder des Bildsensors eines Kanals einer Gruppe in Zwischenpositionen zwischen Bildern der Pixel des Bildsensors eines anderen Kanals dieser Gruppe.

Denkbar wäre beispielsweise auch ohne Superresolutionszwecken, sondern lediglich zu Stereoskopiezwecken eine Ausführung, bei denen eine Gruppe von unmittelbar benachbarten Kanälen in Zeilenerstreckungsrichtung mit Ihren Teilgesichtsfeldern das Gesamtgesichtsfeld vollständig abdecken, und dass eine weitere Gruppe einander unmittelbar benachbarter Kanäle das Gesamtgesichtsfeld ihrerseits vollständig abdecken.

Obige Ausführungsbeispiele lassen sich also in Form einer Multiaperturabbildungsvorrichtung implementieren, und zwar mit einzeiliger Kanalanordnung, wobei jeder Kanal ein Teilgesichtsfeld eines Gesamtgesichtsfeld überträgt und sich die Teilgesichtsfelder teilweise überlappen. Ein Aufbau mit mehreren der solchen Multiaperturabbildungsvorrichtungen für Stereo- Trio-, Quattro usw. Aufbauten für die 3D-Bildaufnahme ist möglich. Die Mehrzahl von Modulen kann dabei als eine zusammenhängende Zeile ausgeführt sein.

Die zusammenhängende Zeile könnte identische Aktoren und ein gemeinsames Strahlumlenkelement nutzen. Ein oder mehrere eventuell im Strahlengang vorhandene verstärkende Substrate können sich über die gesamte Zeile, die einen Stereo-, Trio, Quattro-Aufbau bilden kann, erstrecken. Es können Verfahren der Superresolution genutzt werden, wobei mehrere Kanäle dieselben Teilbildbereiche abbilden. Die optischen Achsen können auch bereits ohne Strahlumlenkvorrichtung divergent verlaufen, so dass weniger Facetten auf der Strahlumlenkeinheit benötigt werden. Die Facetten besitzen dann vorteilhafter Weise nur eine Winkelkomponente. Der Bildsensor kann einteilig sein, nur eine zusammenhängende Pixelmatrix oder mehrere unterbrochene aufweisen. Der Bildsensor kann aus vielen Teilsensoren zusammengesetzt sein, die z.B. auf einer Leiterplatte nebeneinander angeordnet sind. Ein Autofokusantrieb kann so ausgeführt sein, dass das Strahlumlenkelement synchron mit den Optiken bewegt wird, oder ruhend ist.

**Patentansprüche**

1. Multiaperturabbildungsvorrichtung mit:

einem Bildsensor (12);
einem einzeiligen Array (14) von nebeneinander angeordneten optischen Kanälen ($14_1$, $14_2$, $14_3$, $14_4$), wobei jeder optische Kanal eine Optik ($16_1$, $16_2$, $16_3$, $16_4$) zur Abbildung eines Teilgesichtsfelds ($30_1$, $30_2$, $30_3$, $30_4$) eines Gesamtgesichtsfelds (28) auf einen jeweiligen Bildsensorbereich ($12_1$, $12_2$, $12_3$, $12_4$) des Bildsensors umfasst;
einer Strahlumlenkvorrichtung (24) zum Umlenken eines Strahlengangs ($22_1$, $22_2$, $22_3$, $22_4$) der optischen Kanäle; **gekennzeichnet durch**:

einer Einstelleinrichtung (90; $96_i$; $98_i$; $100_i$) zum kanalindividuellen Ändern einer relativen Lage zwischen dem Bildsensorbereich ($12_1$, $12_2$, $12_3$, $12_4$) eines jeweiligen optischen Kanals, der Optik ($16_1$, $16_2$, $16_3$, $16_4$) des jeweiligen optischen Kanals und der Strahlumlenkvorrichtung (24) oder zum kanalindividuellen Ändern einer optischen Eigenschaft der Optik ($16_1$, $16_2$, $16_3$, $16_4$) des jeweiligen optischen Kanals oder eines die Umlenkung des Strahlengangs des jeweiligen optischen Kanals betreffenden Segments ($26_1$, $26_2$, $26_3$, $26_4$) der Strahlumlenkvorrichtung;
einem Speicher mit eingespeicherten Vorgabewerten und/oder einer Steuerung zur Umsetzung von Sensordaten in Vorgabewerte zur kanalindividuellen Ansteuerung der Einstellvorrichtung;
wobei die Strahlumlenkvorrichtung kanalglobal drehbar um eine Drehachse gelagert ist, die parallel zu einer Zeilenerstreckungsrichtung des einzeiligen Arrays liegt;
ferner umfassend einen ersten Aktor (102c) zur Erzeugung einer Rotationsbewegung der Strahlumlenkvorrichtung (24) um die Drehachse aufweist, der von einer optischen Bildstabilisierungssteuerung der Multiaperturabbildungsvorrichtung gesteuert ist; und
ferner umfassend einen zweiten Aktor (102a) zum translatorischen Bewegen von Optiken der des einzeiligen Arrays von optischen Kanälen entlang der Zeilenerstreckungsrichtung des einzeiligen Arrays aufweist, der ferner von der optischen Bildstabilisierungssteuerung der Multiaperturabbildungsvorrichtung gesteuert ist, so dass durch die translatorische Bewegung der Optiken des einzeiligen Arrays von optischen Kanälen eine Bildstabilisierung entlang einer ersten Bildachse und durch die Erzeugung der Rotationsbewegung der Strahlumlenkvorrichtung eine Bildstabilisierung entlang einer zweiten Bildachse bewirkt wird.

2. Multiaperturabbildungsvorrichtung gemäß Anspruch 1, wobei die Einstelleinrichtung Folgendes umfasst:
für zumindest einen, für zumindest zwei oder für jeden Kanal ($14_i$), einen ersten Aktor ($96_i$) zum Bewegen der Optik des jeweiligen Kanals quer und/oder längs der Strahlengangs des jeweiligen Kanals.

3. Multiaperturabbildungsvorrichtung gemäß Anspruch 1 oder 2, wobei die Einstelleinrichtung Folgendes umfasst:
für zumindest einen, für zumindest zwei oder für jeden Kanal ($14_i$), ein Phasenänderungselement ($100_i$) zur Änderung der lokalen Verteilung des Brechungsindex oder einer Form einer optischen Oberfläche der Optik ($16_i$) des jeweiligen optischen Kanals oder des die Umlenkung des Strahlengangs des jeweiligen optischen Kanals betreffenden Segments ($26_i$) der Strahlumlenkvorrichtung.

4. Multiaperturabbildungsvorrichtung gemäß einem der Ansprüche 1 bis 3, wobei die Einstelleinrichtung Folgendes umfasst:
für zumindest einen, für zumindest zwei oder für jeden Kanal ($14_i$), einen zweiten Aktor ($98_i$) zur Kippen des die Umlenkung des Strahlengangs des jeweiligen optischen Kanals betreffenden Segments der Strahlumlenkvorrichtung.

5. Multiaperturabbildungsvorrichtung gemäß einem der vorhergehenden Ansprüche, die zusätzlich zu der Einstelleinrichtung einen Aktor (102) zur Erzeugung einer kanalglobalen Relativbewegung zwischen dem Bildsensor, dem einzeiligen Array und der Strahlumlenkvorrichtung umfasst.

6. Multiaperturabbildungsvorrichtung gemäß Anspruch 5, bei der der zusätzlich zu der Einstelleinrichtung vorhandene Aktor Teil einer Autofokussteuerung (104) oder einer Bildstabilisierungssteuerung (106) der Multiaperturabbildungsvorrichtung ist.

7. Multiaperturabbildungsvorrichtung gemäß einem der vorangehenden Ansprüche, die ferner einen dritten Aktor (102b) zum translatorischen Bewegen von Optiken der Mehrzahl von optischen Kanälen entlang der Strahlengänge ($22_1$, $22_2$, $22_3$, $22_4$) der Mehrzahl von optischen Kanälen aufweist.

8. Multiaperturabbildungsvorrichtung gemäß Anspruch 7, bei der der dritte Aktor (102b) von einer Fokussteuerung der Multiaperturabbildungsvorrichtung gesteuert ist.

9. Multiaperturabbildungsvorrichtung gemäß einem der Ansprüche 1 bis 8, bei der die Vorgabenwerte derart ausgebildet ist, oder in der Steuerung eine Abbildung von aktuellen Sensordaten auf geeignete Vorgabewerte fest integriert ist, so dass die Steuerung derart ausgebildet ist, dass ein Maß für eine Dispersion einer Verteilung eines oder mehrerer Eigenschaften unter den optischen Kanäle durch die Ansteuerung der Einstellvorrichtung mittels der eingespeicherten Vorgabenwerte reduziert wird:

> eine transversale Abweichung der Teilgesichtsfelder von einer regelmäßigen Verteilung der Teilgesichtsfelder,
> Brennweiten der Optiken,
> Schärfentiefentfernungen der optischen Kanäle.

10. Multiaperturabbildungsvorrichtung gemäß einem der Ansprüche 1 bis 9, bei der die Vorgabenwerte oder die Umsetzung durch die Steuerung einen Abhängigkeit von Bildsensordaten der Bildsensorbereiche und/oder Daten von Sensoren betreffend Temperatur, Druck, Feuchte, räumliche Lage der Multiaperturabbildungsvorrichtung und/oder Beschleunigung der Multiaperturabbildungsvorrichtung und/oder Drehrate der Multiaperturabbildungsvorrichtung aufweist.

11. Verfahren zum Einstellen einer Multiaperturabbildungsvorrichtung mit einem Bildsensor (12), einem einzeiligen Array (14) von nebeneinander angeordneten optischen Kanälen ($14_1$, $14_2$, $14_3$, $14_4$), wobei jeder optische Kanal eine Optik ($16_1$, $16_2$, $16_3$, $16_4$) zur Abbildung eines Teilgesichtsfelds ($30_1$, $30_2$, $30_3$, $30_4$) eines Gesamtgesichtsfelds (28) auf einen jeweiligen Bildsensorbereich ($12_1$, $12_2$, $12_3$, $12_4$) des Bildsensors umfasst, und einer Strahlumlenkvorrichtung (24) zum Umlenken eines Strahlengangs ($22_1$, $22_2$, $22_3$, $22_4$) der optischen Kanäle, wobei die Strahlumlenkvorrichtung kanalglobal drehbar um eine Drehachse gelagert ist, die parallel zu einer Zeilenerstreckungsrichtung des einzeiligen Arrays liegt, wobei das Verfahren durch folgende Schritte gekennzeichnet ist:

> Auslesen von Vorgabewerten aus einem Speicher oder Berechnen der Vorgabewerte aus Sensordaten; und
> abhängig von den von Sensordaten in Vorgabewerten, kanalindividuelles Ändern einer relativen Lage zwischen dem Bildsensorbereich ($12_1$, $12_2$, $12_3$, $12_4$) eines jeweiligen optischen Kanals, der Optik ($16_1$, $16_2$, $16_3$, $16_4$) des jeweiligen optischen Kanals und der Strahlumlenkvorrichtung (24) oder zum kanalindividuellen Ändern einer optischen Eigenschaft der Optik ($16_1$, $16_2$, $16_3$, $16_4$) des jeweiligen optischen Kanals oder eines die Umlenkung des Strahlengangs des jeweiligen optischen Kanals betreffenden Segments ($26_1$, $26_2$, $26_3$, $26_4$) der Strahlumlenkvorrichtung;
Erzeugen einer Rotationsbewegung der Strahlumlenkvorrichtung (24) um die Drehachse mit einem ersten Aktor (102c), und Steuern des ersten Aktors (102c) mit einer optischen Bildstabilisierungssteuerung der Multiaperturabbildungsvorrichtung; und
translatorisches Bewegen von Optiken der des einzeiligen Arrays von optischen Kanälen mit einem zweiten Aktor (102a) entlang der Zeilenerstreckungsrichtung des einzeiligen Arrays, Steuern des zweiten Aktors (102a) mit der optischen Bildstabilisierungssteuerung der Multiaperturabbildungsvorrichtung, so dass durch die translatorische Bewegung der Optiken des einzeiligen Arrays von optischen Kanälen eine Bildstabilisierung entlang einer ersten Bildachse und durch die Erzeugung der Rotationsbewegung der Strahlumlenkvorrichtung eine Bildstabilisierung entlang einer zweiten Bildachse bewirkt wird.

**Claims**

1. A multi-aperture imaging device comprising:

> an image sensor (12);
> a single-line array (14) of optical channels ($14_1$, $14_2$, $14_3$, $14_4$) arranged next to one another, wherein each optical channel comprises optics ($16_1$, $16_2$, $16_3$, $16_4$) for projecting a partial field of view ($30_1$, $30_2$, $30_3$, $30_4$) of a total field of view (28) on a respective image sensor region ($12_1$, $12_2$, $12_3$, $12_4$) of the image sensor;
> a beam-deflecting device (24) for deflecting an optical path ($22_1$, $22_2$, $22_3$, $22_4$) of the optical channels; **characterized by**:

>> adjusting means ($90$; $96_i$; $98_i$; $100_i$) for channel-specifically changing a relative position between the image sensor region ($12_1$, $12_2$, $12_3$, $12_4$) of a respective optical channel, the optics ($16_1$, $16_2$, $16_3$, $16_4$) of the respective optical channel and the beam-deflecting device (24) or for channel-specifically changing an optical characteristic of the optics ($16_1$, $16_2$, $16_3$, $16_4$) of the respective optical channel or a segment ($26_1$, $26_2$, $26_3$, $26_4$) of the beam-deflecting device relating to deflecting the optical path of the respective optical channel;
>> a storage with default values stored therein and/or a controller for converting sensor data to default values for channel-specifically controlling the adjusting device;

wherein the beam-deflecting device is supported to be channel-globally rotatable around a rotational axis which is parallel to a line extension direction of the single-line array;

further comprising a first actuator (102c) for generating a rotational movement of the beam-deflecting device (24) around the rotational axis which is controlled by an optical image-stabilizing controller of the multi-aperture imaging device; and

further comprising a second actuator (102a) for a translatory movement of optics of the single-line array of optical channels along the line extension direction of the single-line array, further controlled by the optical image-stabilizing controller of the multi-aperture imaging device such that image stabilization along a first image axis is caused by the translatory movement of the optics of the single-line array of optical channels and image stabilization along a second image axis is caused by generating the rotational movement of the beam-deflecting device.

2. The multi-aperture imaging device in accordance with claim 1, wherein the adjusting means comprises:

for at least one, for at least two or for each channel $(14_i)$, a first actuator $(96_i)$ for moving the optics of the respective channel transversely and/or longitudinally to the optical path of the respective channel.

3. The multi-aperture imaging device in accordance with claim 1 or 2, wherein the adjusting means comprises:

for at least one, for at least two or for each channel $(14_i)$, a phase-change element $(100_i)$ for changing the local distribution of the refraction index or a shape of an optical surface of the optics $(16_i)$ of the respective optical channel or the segment $(26_i)$ of the beam-deflecting device relating to deflecting the optical path of the respective optical channel.

4. The multi-aperture imaging device in accordance with any of claims 1 to 3, wherein the adjusting means comprises:

for at least one, for at least two or for each channel $(14_i)$, a second actuator $(98_i)$ for tilting the segment of the beam-deflecting device relating to deflecting the optical path of the respective optical channel.

5. The multi-aperture imaging device in accordance with any of the preceding claims, which, in addition to the adjusting means, comprises an actuator (102) for generating a channel-global relative movement between the image sensor, the single-line array and the beam-deflecting device.

6. The multi-aperture imaging device in accordance with claim 5, wherein the actuator present in addition to the adjusting means is part of an autofocusing controller (104) or an image-stabilizing controller (106) of the multi-aperture imaging device.

7. The multi-aperture imaging device in accordance with any of the preceding claims, further comprising a third actuator (102b) for a translatory movement of optics of the plurality of optical channels along the optical paths $(22_1, 22_2, 22_3, 22_4)$ of the plurality of optical channels.

8. The multi-aperture imaging device in accordance with claim 7, wherein the third actuator (102b) is controlled by a focus controller of the multi-aperture imaging device.

9. The multi-aperture imaging device in accordance with any of claims 1 to 8, wherein the default values are configured such that or, in the controller, mapping of current sensor data to suitable default values is fixedly integrated so that the controller is configured such that a measure for a dispersion of a distribution of one or several characteristics among the optical channels is reduced by controlling the adjusting device by means of the stored default values:

a transversal deviation of the partial fields of view from a regular distribution of the partial fields of view,
focal lengths of the optics,
depth-of-field distances of the optical channels.

10. The multi-aperture imaging device in accordance with any of claims 1 to 9, wherein the default values or conversion by the controller exhibit/s a dependence on image sensor data of the image sensor regions and/or sensor data relating to temperature, pressure, humidity, spatial position of the multi-aperture imaging device and/or acceleration of the multi-aperture imaging device and/or rotational rate of the multi-aperture imaging device.

11. A method for adjusting a multi-aperture imaging device comprising an image sensor (12), a single-line array (14) of optical channels $(14_1, 14_2, 14_3, 14_4)$ arranged next to one another, wherein each optical channel comprises optics $(16_1, 16_2, 16_3, 16_4)$ for projecting a partial field of view $(30_1, 30_2, 30_3, 30_4)$ of a total field of view (28) on a respective image sensor region $(12_1, 12_2, 12_3, 12_4)$ of the image sensor, and a beam-deflecting device (24) for deflecting an opti-

cal path ($22_1$, $22_2$, $22_3$, $22_4$) of the optical channels, the beam-deflecting device being supported to be channel-globally rotatable around a rotational axis which is parallel to a line extension direction of the single-line array, the method being **characterized by** comprising:

> reading out default values from a storage or calculating the default values from sensor data; and in dependence on sensor data in default values, channel-specifically changing a relative position between the image sensor region ($12_1$, $12_2$, $12_3$, $12_4$) of a respective optical channel, the optics ($16_1$, $16_2$, $16_3$, $16_4$) of the respective optical channel and the beam-deflecting device (24) or for channel-specifically changing an optical characteristic of the optics ($16_1$, $16_2$, $16_3$, $16_4$) of the respective optical channel or a segment ($26_1$, $26_2$, $26_3$, $26_4$) of the beam-deflecting device relating to deflecting the optical path of the respective optical channel;
>
> generating, by a first actuator (102c), a rotational movement of the beam-deflecting device (24) around the rotational axis, and controlling the first actuator (102c) by an optical image-stabilizing controller of the multi-aperture imaging device; and,
>
> by a second actuator (102a), translatory movement of optics of the single-line array of optical channels along the line extension direction of the single-line array, controlling the second actuator (102a) by the optical image-stabilizing controller of the multi-aperture imaging device such that image stabilization along a first image axis is caused by the translatory movement of the optics of the single-line array of optical channels and image stabilization along a second image axis is caused by generating the rotational movement of the beam-deflecting device.

**Revendications**

1. Dispositif d'imagerie à ouvertures multiples, avec:

> un capteur d'image (12);
> un réseau de rangée unique (14) de canaux optiques disposés adjacents l'un à l'autre ($14_1$, $14_2$, $14_3$, $14_4$), où chaque canal optique comporte une optique ($16_1$, $16_2$, $16_3$, $16_4$) destinée à reproduire un champ de vision partiel ($30_1$, $30_2$, $30_3$, $30_4$) d'un champ de vision global (28) sur une zone de capteur d'image respective ($12_1$, $12_2$, $12_3$, $12_4$) du capteur d'image;
> un dispositif de déviation de faisceau (24) destiné à dévier un trajet de faisceau ($22_1$, $22_2$, $22_3$, $22_4$) des canaux optiques;
> **caractérisé par**:

> un moyen de réglage (90; $96_i$; $98_i$; $100_1$) destiné à modifier de manière individuelle par canal une position relative entre la zone de capteur d'image ($12_1$, $12_2$, $12_3$, $12_4$) d'un canal optique respectif, l'optique ($16_1$, $16_2$, $16_3$, $16_4$) du canal optique respectif et du dispositif de déviation de faisceau (24) ou pour modifier de manière individuelle par canal une propriété optique de l'optique ($16_1$, $16_2$, $16_3$, $16_4$) du canal optique respectif ou d'un segment du dispositif de déviation de faisceau relatif à la déviation du trajet du faisceau du canal optique respectif ($26_1$, $26_2$, $26_3$, $26_4$);
> une mémoire avec des valeurs par défaut mémorisées et/ou une commande destinée à convertir les données de capteur en valeurs par défaut pour une commande individuelle par canal du dispositif de réglage;
> dans lequel le dispositif de déviation de faisceau est monté de manière à pouvoir tourner de manière globale pour les canaux autour d'un axe de rotation qui est parallèle à une direction d'extension de rangée du réseau de rangée unique;
> présentant par ailleurs un premier actionneur (102c) destiné à générer un mouvement de rotation du dispositif de déviation de faisceau (24) autour de l'axe de rotation qui est commandé par une commande de stabilisation d'image optique du dispositif d'imagerie à ouvertures multiples; et présentant par ailleurs un deuxième actionneur (102a) destiné à déplacer en translation les optiques du réseau de rangée unique des canaux optiques dans la direction d'extension de rangée du réseau de rangée unique qui est par ailleurs commandé par la commande de stabilisation d'image optique du dispositif d'imagerie à ouvertures multiples, de sorte que soit provoquée, par le déplacement en translation des optiques du réseau de rangée unique des canaux optiques, une stabilisation d'image le long d'un premier axe d'image et, par la génération du mouvement de rotation du dispositif de déviation de faisceau, une stabilisation d'image le long d'un deuxième axe d'image.

2. Dispositif d'imagerie à ouvertures multiples selon la revendication 1, dans lequel le moyen de réglage comporte:
pour au moins un, pour au moins deux, ou pour chaque canal ($14_i$), un premier actionneur ($96_i$) destiné à déplacer l'optique du canal respectif de manière transversale et/ou longitudinale par rapport au trajet du faisceau du canal respectif.

**3.** Dispositif d'imagerie à ouvertures multiples selon la revendication 1 ou 2, dans lequel le moyen de réglage comporte:
pour au moins un, pour au moins deux, ou pour chaque canal ($14_i$), un élément de changement de phase ($100_i$) destiné à changer la répartition locale de l'indice de réfraction ou une forme d'une surface optique de l'optique ($16_i$) du canal optique respectif ou du segment du dispositif de déviation de faisceau relatif à la déviation du trajet du faisceau du canal optique respectif ($26_i$).

**4.** Dispositif d'imagerie à ouvertures multiples selon l'une des revendications 1 à 3, dans lequel le moyen de réglage comprend:
pour au moins un, pour au moins deux, ou pour chaque canal ($14_i$), un deuxième actionneur ($98_i$) destiné à faire basculer le segment du dispositif de déviation de faisceau relatif à la déviation du trajet de faisceau du canal optique respectif.

**5.** Dispositif d'imagerie à ouvertures multiples selon l'une des revendications précédentes, qui, en plus du moyen de réglage, comporte un actionneur (102) destiné à générer un mouvement relatif global pour les canaux entre le capteur d'image, le réseau de rangée unique et le dispositif de déviation de faisceau.

**6.** Dispositif d'imagerie à ouvertures multiples selon la revendication 5, dans lequel l'actionneur présent en plus du moyen de réglage fait partie d'une commande d'auto-focalisation (104) ou d'une commande de stabilisation d'image (106) du dispositif d'imagerie à ouvertures multiples.

**7.** Dispositif d'imagerie à ouvertures multiples selon l'une des revendications précédentes, présentant par ailleurs un troisième actionneur (102b) destiné à déplacer en translation les optiques de la pluralité de canaux optiques le long des trajets de faisceau ($22_1$, $22_2$, $22_3$, $22_4$) de la pluralité de canaux optiques.

**8.** Dispositif d'imagerie à ouvertures multiples selon la revendication 7, dans lequel le troisième actionneur (102b) est commandé par une commande de focalisation du dispositif d'imagerie à ouvertures multiples.

**9.** Dispositif d'imagerie à ouvertures multiples selon l'une des revendications 1 à 8, dans lequel les valeurs par défaut sont conçues de sorte que, ou une reproduction des données de capteur actuelles sur les valeurs par défaut appropriées est intégrée de manière fixe dans la commande, de sorte que la commande soit conçue de sorte qu'une mesure pour une dispersion d'une répartition d'une ou plusieurs propriétés parmi les canaux optiques soit réduite en commandant le dispositif de réglage à l'aide des valeurs par défaut mémorisées:

une déviation transversale des champs visuels partiels par rapport à une répartition régulière des champs visuels partiels,
les distances focales des optiques,
les distances de profondeur de champ des canaux optiques.

**10.** Dispositif d'imagerie à ouvertures multiples selon l'une des revendications 1 à 9, dans lequel les valeurs par défaut ou la mise en oeuvre par la commande présentent une dépendance des données de capteur d'image des zones de capteur d'image et/ou des données de capteur relatives à la température, à la pression, à l'humidité, à la position spatiale du dispositif d'imagerie à ouvertures multiples et/ou de l'accélération du dispositif d'imagerie à ouvertures multiples et/ou de la vitesse de rotation du dispositif d'imagerie à ouvertures multiples.

**11.** Procédé de réglage d'un dispositif d'imagerie à ouvertures multiples avec un capteur d'image (12), un réseau de rangée unique (14) de canaux optiques disposés adjacents l'un à l'autre ($14_1$, $14_2$, $14_3$, $14_4$), dans lequel chaque canal optique comporte une optique ($16_1$, $16_2$, $16_3$, $16_4$) destinée à reproduire un champ de vision partiel ($30_1$, $30_2$, $30_3$, $30_4$) d'un champ de vision global (28) sur une zone de capteur d'image respective ($12_1$, $12_2$, $12_3$, $12_4$) du capteur d'image, et un dispositif de déviation de faisceau (24) destiné à dévier un trajet de faisceau ($22_1$, $22_2$, $22_3$, $22_4$) des canaux optiques, dans lequel le dispositif de déviation de faisceau est monté de manière à pouvoir tourner de manière globale pour les canaux autour d'un axe de rotation qui est parallèle à une direction d'extension de rangée du réseau de rangée unique, dans lequel le procédé est **caractérisé par** les étapes suivantes consistant à:

lire les valeurs par défaut dans une mémoire ou calculer les valeurs par défaut à partir des données de capteur; et
en fonction des données de capteur en valeurs par défaut, modifier de manière individuelle par canal une position relative entre la zone de capteur d'image ($12_1$, $12_2$, $12_3$, $12_4$) d'un canal optique respectif, l'optique ($16i$, $16_2$, $16_3$, $16_4$) du canal optique respectif et le dispositif de déviation de faisceau (24) ou modifier de manière individuelle par canal une propriété optique de l'optique ($16_1$, $16_2$, $16_3$, $16_4$) du canal optique respectif ou d'un segment ($26_i$, $26_2$, $26_3$, $26_4$) du dispositif de déviation de faisceau relatif à la déviation du trajet du faisceau du canal optique respectif;

générer un mouvement de rotation du dispositif de déviation de faisceau (24) autour de l'axe de rotation par un premier actionneur (102c), et commander le premier actionneur (102c) par une commande de stabilisation d'image optique du dispositif d'imagerie à ouvertures multiples; et

déplacer en translation les optiques du réseau de rangée unique de canaux optiques par un deuxième actionneur (102a) dans la direction d'extension de rangée du réseau de rangée unique, commander le deuxième actionneur (102a) par la commande de stabilisation d'image optique du dispositif d'imagerie à ouvertures multiples, de sorte que soit provoquée, par le déplacement en translation des optiques du réseau de rangée unique des canaux optiques, une stabilisation d'image le long d'un premier axe d'image et, par la génération du mouvement de rotation du dispositif de déviation de faisceau, une stabilisation de l'image le long d'un deuxième axe d'image.

FIG 1

FIG 2

FIG 3

FIG 4

FIG 5

EP 3 338 131 B1

200

204

202

12

10  14  24  206

## FIG 6

200

204

202

16  206

B

10

## FIG 7

FIG 8A

EP 3 338 131 B1

FIG 8B

EP 3 338 131 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014111650 A1
- US 2015109468 A1
- DE 2014213371 B3
- DE 102013209819 A1
- US 2015215607 A1
- US 2009122406 A1
- US 2015201128 A1
- WO 2015015383 A2
- US 6992699 B1